# EUROPEAN PATENT APPLICATION

(11) **EP 4 142 328 A1**
(43) Date of publication of application: **01.03.2023**
(21) Application number: 21804149.9
(22) Date of filing: 27.04.2021
(51) Int. Cl.: H04W 12/06

(54) **NETWORK AUTHENTICATION METHOD AND APPARATUS, AND SYSTEM**

(30) Priority: 09.05.2020 CN 202010389031
(71) Applicant: Huawei Technologies Co., Ltd., Shenzhen, Guangdong 518129 (CN)
(72) Inventor: ZHANG, Bo, Shenzhen, Guangdong 518129 (CN); HE, Chengdong, Shenzhen, Guangdong 518129 (CN); DENG, Juan, Shenzhen, Guangdong 518129 (CN); LI, Fei, Shenzhen, Guangdong 518129 (CN)
(74) Representative: Thun, Clemens
(86) International application number: PCT/CN2021/090106
(87) International publication number: WO 2021/227866

(57) **Abstract**

Embodiments of this application disclose a network authentication method, apparatus, and system. In this application, user equipment sends a request to request a network to execute an onboarding service. A core network element determines, based on an NPN identity included in the request, that the network allows execution of the onboarding service for an NPN, or determines, based on a user equipment identity and a manufacturer identity, that the network allows execution of the onboarding service for a manufacturer, and may further authenticate validity of the user equipment. Then, a provisioning server of the NPN authenticates the user equipment, and sends subscription information of the user equipment to the user equipment. In this way, when the user equipment does not include identity information issued by the network, the user equipment may communicate with the NPN via the network by requesting the network to provide the onboarding service.

## Description

This application claims priority to Chinese Patent Application No. 202010389031.6, filed with the China National Intellectual Property Administration on May 9, 2020 and entitled "NETWORK AUTHENTICATION METHOD, APPARATUS, AND SYSTEM", which is incorporated herein by reference in its entirety.

### TECHNICAL FIELD

This application relates to the field of communication technologies, and in particular, to a network authentication method, apparatus, and system.

### BACKGROUND

A current 5^{th} generation (5^{th} generation, 5G) mobile communication technology provides a new application scenario, that is, an enhanced non-public network (enhanced non-public-network, eNPN). The eNPN can implement end-to-end resource isolation, to provide a dedicated access network for vertical industries, ensuring exclusive use of resources for vertical industry users. In addition, the eNPN may support local area network (local area network, LAN) services to meet the requirements of enterprises, residential areas, and schools for reliable and stable private networks. The eNPN is further classified into: a completely independently deployed network, that is, a standalone non-public network (standalone non-public network, SNPN), and a public network integrated non-public network (public network integrated non-public network, PNI-NPN), for example, a non-public network carried by a public land mobile network (public land mobile network, PLMN).

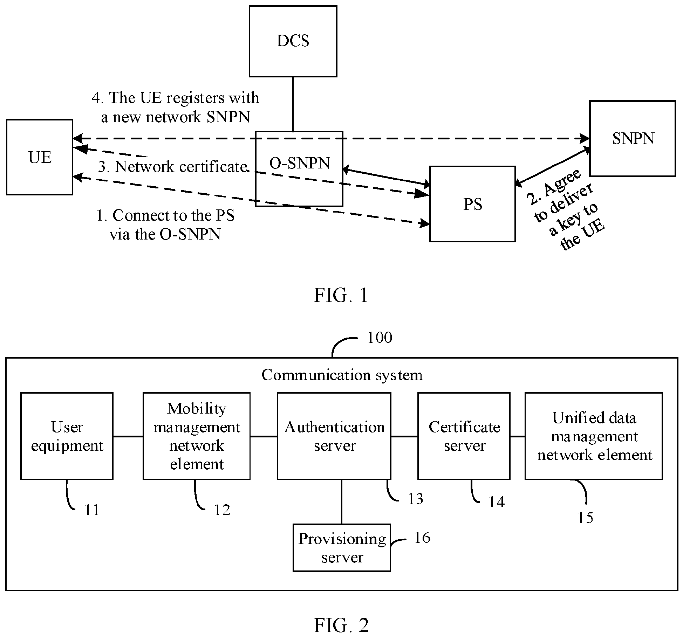

FIG. 1 is a schematic architectural diagram of an eNPN. The eNPN architecture includes user equipment (user equipment, UE), an onboarding standalone non-public network (onboarding standalone non-public network, O-SNPN), a default credential server (default credential server, DCS), a provisioning server (provisioning server, PS), and an SNPN. The eNPN includes an onboarding (onboarding) service. For example, if devices (for example, UE) are purchased from a manufacturer for the SNPN, the SNPN may configure the UE in a unified configuration manner instead of in a one-by-one (one-by-one) manner. The specific process is that the UE may first access the O-SNPN, and then access the PS. The PS stores user subscription information of the SNPN or user subscription information obtained from the SNPN. The PS sends the user subscription information to the UE. Then, the UE may use a new identity to access the SNPN based on the user subscription information.

The UE accesses the SNPN via another network, the another network needs to provide an onboarding service, and the SNPN needs to authenticate the UE. If the UE includes identity information issued by a network, the UE may establish security authentication with the network, and then additionally apply for obtaining the identity of the SNPN depending on service requirements.

However, if the UE does not include identity information issued by the network, the UE cannot obtain an onboarding service provided by the network, and cannot be authenticated by the NPN to communicate with the NPN.

Therefore, when the UE does not include the identity information issued by the network, how to communicate with the NPN by executing the onboarding service by the network and through authentication of the NPN is a problem that needs to be resolved in this application.

### SUMMARY

This application provides a network authentication method, apparatus, and system, so that when the user equipment does not include identity information issued by a network, the user equipment may communicate with an NPN by executing an onboarding service by the network and through authentication by the NPN.

According to a first aspect, sending a first registration request is provided, where the first registration request includes one or more of the following information: a user equipment identity, a manufacturer identity, a non-public network NPN identity, first indication information, and slice selection assistance information, and the first indication information is for requesting a network to execute an onboarding service; and receiving a first registration response, where the first registration response includes subscription information of the user equipment. In this aspect, when the user equipment does not include identity information issued by the network, the user equipment may communicate with an NPN via the network by requesting the network to provide an onboarding service and through authentication performed by the NPN on the user equipment.

In a possible implementation, the first registration request further includes a first certificate and a first security parameter. The first security parameter is for authenticating validity of the user equipment. Before the sending a first registration request, the method further includes: generating the first security parameter based on one or more of the user equipment identity, the manufacturer identity, a first security key, a network identity, and the NPN identity. In this implementation, the network may further authenticate validity of the user equipment, improving reliability of network authentication.

In another possible implementation, the method further includes: receiving a first authentication request, where the first authentication request requests the user equipment to authenticate the network, the first authentication request includes a third security parameter and/or a second certificate, and the third security parameter is generated based on one or more of the user equipment identity, the manufacturer identity, a second security key, the network identity, and the NPN identity; verifying correctness of the second certificate based on a root certificate of a manufacturer; and/or verifying, based on the network identity based on which the third security parameter is generated, whether the network identity is consistent with a network identity of the network on which the user equipment requests to execute the onboarding service; if the verification succeeds, verifying the third security parameter based on the second security key in the second certificate; if the verification succeeds, generating the first security parameter based on one or more of the user equipment identity, the manufacturer identity, the first security key, the network identity, and the NPN identity; and sending a first authentication response, where the first authentication response includes the first certificate and/or the first security parameter. In this implementation, the network providing the onboarding service and the user equipment may perform mutual authentication, improving reliability of network authentication.

In still another possible implementation, if the network allows the user equipment to use the onboarding service, and/or the first security parameter is valid, the method further includes: receiving a second authentication request from a provisioning server, where the second authentication request includes a fourth security parameter and/or a third certificate, and the fourth security parameter is generated based on one or more of the user equipment identity, the manufacturer identity, the NPN identity, the network identity, and a third security key; verifying correctness of the third certificate based on a root certificate of a manufacturer; if the verification is correct, verifying the fourth security parameter based on the third security key in the third certificate; and if the verification is correct, sending a response to the second authentication request to the provisioning server, where the response to the second authentication request includes the first certificate and/or the first security parameter, and the first security parameter is generated based on one or more of the user equipment identity, the manufacturer identity, the first security key, the network identity, and the NPN identity. In this implementation, the NPN and the user equipment may perform mutual authentication, improving reliability of network authentication.

In still another possible implementation, the method further includes: verifying, based on the network identity based on which the fourth security parameter is generated, whether the network identity is consistent with a network identity corresponding to the network to which the user equipment requests access; and/or verifying, based on the NPN identity based on which the fourth security parameter is generated, whether the NPN identity is consistent with an NPN identity corresponding to an NPN on which the user equipment requests for onboarding. In this implementation, the user equipment may authenticate validity of the NPN, improving reliability of network authentication.

According to a second aspect, a network authentication method is provided. The method includes: receiving a first registration request, where the first registration request includes one or more of the following information: a user equipment identity, a manufacturer identity, a non-public network NPN identity, first indication information, and slice selection assistance information, and the first indication information is for requesting a network to execute an onboarding service; determining, based on the first indication information, that the user equipment requests the network to execute the onboarding service; sending a subscription information obtaining request, where the subscription information obtaining request includes one or more of the following information: the user equipment identity, the manufacturer identity, a network identity, the NPN identity, and third indication information, and the third indication information indicates that the network allows execution of the onboarding service for the user equipment, and/or indicates to perform NPN authentication; receiving a subscription information obtaining response, where the subscription information obtaining response includes subscription information of the user equipment; and sending a first registration response, where the first registration response includes the subscription information of the user equipment.

In a possible implementation, the method further includes: determining, based on the first registration request, that the network allows execution of the onboarding service for the user equipment.

In another possible implementation, the determining, based on the first registration request, that the network allows execution of the onboarding service for the user equipment includes: determining, based on the NPN identity, that the network allows execution of the onboarding service for an NPN corresponding to the NPN identity, and/or determining, based on the user equipment identity and/or the manufacturer identity, that the network allows to perform onboarding service authentication on a device of a manufacturer corresponding to the manufacturer identity; or sending a second registration request, where the second registration request includes one or more of the following information: the user equipment identity, the manufacturer identity, the NPN identity, second indication information, and the slice selection assistance information, where the second indication information is for requesting the network to execute the onboarding service; and receiving a second registration response, where the second registration response includes the third indication information.

In still another possible implementation, the first registration request further includes a first certificate and a first security parameter. The first security parameter is for authenticating validity of the user equipment, and is generated based on one or more of the user equipment identity, the manufacturer identity, a first security key, the network identity, and the NPN identity. The method further includes: verifying correctness of the first certificate based on a root certificate of a manufacturer; and/or verifying, based on the network identity based on which the first security parameter is generated, whether the network identity is consistent with a network identity of the network on which the user equipment requests to execute the onboarding service; and if the verification succeeds, authenticating the first security parameter based on the first security key in the first certificate, to determine that the user equipment is valid; or sending a third authentication request, where the third authentication request includes one or more of the following information: the user equipment identity, the manufacturer identity, the first certificate, the NPN identity, fourth indication information, and the first security parameter, where the fourth indication information is for requesting to verify whether the user equipment is valid; and receiving a third authentication response, where the third authentication response indicates whether the user equipment is valid.

According to a third aspect, a network authentication method is provided. The method includes: receiving a subscription information obtaining request, where the subscription information obtaining request includes one or more of the following information: a user equipment identity, a manufacturer identity, a network identity, a non-public network NPN identity, and third indication information, where the third indication information indicates that a network allows execution of an onboarding service for user equipment, and/or indicates to perform NPN authentication; determining an address of a provisioning server of an NPN based on the NPN identity; sending a subscription information configuration request, where the subscription information configuration request includes one or more of the following information: the user equipment identity, the manufacturer identity, a first certificate, and the NPN identity; receiving a subscription information configuration response, where the subscription information configuration response includes subscription information of the user equipment; and sending a subscription information obtaining response, where the subscription information obtaining response includes the subscription information of the user equipment.

In a possible implementation, the method further includes: receiving a second registration request, where the second registration request includes one or more of the following information: the user equipment identity, the manufacturer identity, the NPN identity, second indication information, and slice selection assistance information, where the second indication information is for requesting the network to execute the onboarding service; determining, based on the second registration request, that the network allows execution of the onboarding service for the user equipment; and sending a second registration response, where the second registration response includes the third indication information.

In another possible implementation, the second registration request further includes a first certificate and a first security parameter. The first security parameter is for authenticating validity of the user equipment, and is generated based on one or more of the user equipment identity, the manufacturer identity, a first security key, the network identity, and the NPN identity. The method further includes: verifying correctness of the first certificate based on a root certificate of a manufacturer; and/or verifying, based on the network identity based on which the first security parameter is generated, whether the network identity is consistent with a network identity of the network on which the user equipment requests to execute the onboarding service; and if the verification succeeds, authenticating the first security parameter based on the first security key in the first certificate, to determine that the user equipment is valid.

In still another possible implementation, the method further includes: receiving a second security parameter obtaining request, where the second security parameter obtaining request includes one or more of the following information: the user equipment identity, the manufacturer identity, the NPN identity, and the network identity; generating a second security parameter based on one or more of the user equipment identity, the manufacturer identity, the NPN identity, the network identity, and a second security key; and sending a second security parameter obtaining response, where the second security parameter obtaining response includes the second security parameter and/or a second certificate.

In still another possible implementation, the method further includes: receiving a network authentication result notification, where the network authentication result notification includes one or more of the following information: the user equipment identity, an indication indicating the network to confirm execution of the onboarding service, a result of mutual authentication between the user equipment and the network, and the NPN identity; and forwarding the network authentication result notification.

According to a fourth aspect, a network authentication method is provided, where a network allows user equipment to use an onboarding service, and/or the user equipment is valid. The method includes: receiving a subscription information configuration request, where the subscription information configuration request includes one or more of the following information: a user equipment identity, a manufacturer identity, a first certificate, and a non-public network NPN identity; verifying correctness of the first certificate based on a root certificate of a manufacturer; and/or verifying whether an NPN corresponding to the NPN identity is consistent with an NPN on which the user equipment requests for onboarding; and if the verification succeeds, sending a subscription information configuration response, where the subscription information configuration response includes subscription information of the user equipment.

In a possible implementation, the method further includes: sending a second authentication request, where the second authentication request includes a fourth security parameter and/or a third certificate, and the fourth security parameter is generated based on one or more of the user equipment identity, the manufacturer identity, the NPN identity, a network identity, and a third security key; receiving a response to the second authentication request, where the response to the second authentication request includes the first certificate and/or a first security parameter, and the first security parameter is generated based on one or more of the user equipment identity, the manufacturer identity, the first security key, the network identity, and the NPN identity; verifying correctness of the first certificate based on the root certificate of the manufacturer; and if the verification is correct, verifying the fourth security parameter based on the first security key in the first certificate.

In another possible implementation, the method further includes: receiving a network authentication result notification, where the network authentication result notification includes one or more of the following information: the user equipment identity, an indication indicating the network to confirm execution of the onboarding service, a result of mutual authentication between the user equipment and the network, and the NPN identity.

According to a fifth aspect, a network authentication apparatus is provided, which can implement the network authentication method in any one of the first aspect or the possible implementations of the first aspect. For example, the network authentication apparatus may be a chip (such as a communication chip) or a device. The foregoing method may be implemented by software, hardware, or hardware executing corresponding software.

In a possible implementation, the network authentication apparatus may include units or modules for performing corresponding actions in the foregoing method.

The network authentication apparatus includes: a transceiver unit, configured to send a first registration request, where the first registration request includes one or more of the following information: a user equipment identify, a manufacturer identity, a non-public network NPN identity, first indication information, and slice selection assistance information, and the first indication information is for requesting a network to execute an onboarding service; and the transceiver unit is further configured to receive a first registration response, where the first registration response includes subscription information of the user equipment.

Optionally, the first registration request further includes a first certificate and a first security parameter, and the first security parameter is for authenticating validity of the user equipment. The apparatus further includes a processing unit, configured to generate the first security parameter based on one or more of the user equipment identity, the manufacturer identity, a first security key, a network identity, and the NPN identity.

Optionally, the transceiver unit is further configured to receive a first authentication request, where the first authentication request requests the user equipment to authenticate the network, the first authentication request includes a third security parameter and/or a second certificate, and the third security parameter is generated based on one or more of the user equipment identity, the manufacturer identity, a second security key, the network identity, and the NPN identity. The processing unit is further configured to verify correctness of the second certificate based on a root certificate of a manufacturer; and/or verify, based on the network identity based on which the third security parameter is generated, whether the network identity is consistent with a network identity of the network on which the user equipment requests to execute the onboarding service; and if the verification succeeds, verify the third security parameter based on the second security key in the second certificate; and if the verification succeeds, generate the first security parameter based on one or more of the user equipment identity, the manufacturer identity, the first security key, the network identity, and the NPN identity. The transceiver unit is further configured to send a first authentication response, where the first authentication response includes the first certificate and/or the first security parameter.

Optionally, if the network allows the user equipment to use the onboarding service, and/or the first security parameter is valid, the apparatus further includes: The transceiver unit is further configured to receive a second authentication request from a provisioning server, where the second authentication request includes a fourth security parameter and/or a third certificate, and the fourth security parameter is generated based on one or more of the user equipment identity, the manufacturer identity, the NPN identity, the network identity, and a third security key. The processing unit is further configured to verify correctness of the third certificate based on the root certificate of the manufacturer; and if the verification is correct, verify the fourth security parameter based on the third security key in the third certificate. The transceiver unit is further configured to: if the verification is correct, send a response to the second authentication request to the provisioning server, where the response to the second authentication request includes the first certificate and/or the first security parameter, and the first security parameter is generated based on one or more of the user equipment identity, the manufacturer identity, the first security key, the network identity, and the NPN identity.

Optionally, the processing unit is further configured to verify, based on the network identity based on which the fourth security parameter is generated, whether the network identity is consistent with a network identity corresponding to the network to which the user equipment requests access; and/or verify, based on the NPN identity based on which the third security parameter is generated, whether the NPN identity is consistent with an NPN identity corresponding to an NPN on which the user equipment requests for onboarding.

In another possible implementation, the network authentication apparatus includes: an input interface, an output interface, and a processing circuit. The output interface is configured to output a first registration request, where the first registration request includes one or more of the following information: a user equipment identity, a manufacturer identity, a non-public network NPN identity, first indication information, and slice selection assistance information, and the first indication information is for requesting a network to execute an onboarding service. The input interface is further configured to input a first registration response, where the first registration response includes subscription information of user equipment.

Optionally, the first registration request further includes a first certificate and a first security parameter, and the first security parameter is for authenticating validity of the user equipment. The processing circuit is configured to generate the first security parameter based on one or more of the user equipment identity, the manufacturer identity, a first security key, a network identity, and the NPN identity.

Optionally, the input interface is further configured to input a first authentication request, where the first authentication request requests the user equipment to authenticate the network, the first authentication request includes a third security parameter and/or a second certificate, and the third security parameter is generated based on one or more of the user equipment identity, the manufacturer identity, a second security key, the network identity, and the NPN identity. The processing circuit is further configured to verify correctness of the second certificate based on a root certificate of a manufacturer; and/or verify, based on the network identity based on which the third security parameter is generated, whether the network identity is consistent with a network identity of the network on which the user equipment requests to execute the onboarding service; and if the verification succeeds, verify the third security parameter based on the second security key in the second certificate. The processing circuit is further configured to: if the verification succeeds, generate the first security parameter based on one or more of the user equipment identity, the manufacturer identity, the first security key, the network identity, and the NPN identity. The output interface is further configured to output a first authentication response, where the first authentication response includes the first certificate and/or the first security parameter.

Optionally, if the network allows the user equipment to use the onboarding service, and/or the first security parameter is valid, the input interface is further configured to input a second authentication request from a provisioning server, where the second authentication request includes a fourth security parameter and/or a third certificate, and the fourth security parameter is generated based on one or more of the user equipment identity, the manufacturer identity, the NPN identity, the network identity, and a third security key. The processing circuit is further configured to verify correctness of the third certificate based on the root certificate of the manufacturer. The processing circuit is further configured to: if the verification is correct, verify the fourth security parameter based on the third security key in the third certificate. The output interface is further configured to: if the verification is correct, output a response to the second authentication request to the provisioning server, where the response to the second authentication request includes the first certificate and/or the first security parameter, and the first security parameter is generated based on one or more of the user equipment identity, the manufacturer identity, the first security key, the network identity, and the NPN identity.

Optionally, the processing circuit is further configured to verify, based on the network identity based on which the fourth security parameter is generated, whether the network identity is consistent with a network identity corresponding to the network to which the user equipment requests access; and/or verify, based on the NPN identity based on which the fourth security parameter is generated, whether the NPN identity is consistent with an NPN identity corresponding to an NPN on which the user equipment requests for onboarding.

In still another possible implementation, the network authentication apparatus includes a processor. The processor is configured to perform the network authentication method in any one of the first aspect or the possible implementations of the first aspect.

In still another possible implementation, the network authentication apparatus includes a processor configured to execute a program stored in a memory. When the program is executed, the network authentication apparatus is enabled to perform the network authentication method in any one of the first aspect or the possible implementations of the first aspect.

For example, the network authentication apparatus further includes a memory coupled to the at least one processor.

For example, the memory is located outside the network authentication apparatus.

For example, the network authentication apparatus further includes a communication interface, and the communication interface is used by the network authentication apparatus to communicate with another device. The communication interface may be a transceiver, an input/output interface, a circuit, or the like.

In still another possible implementation, the network authentication apparatus includes a processor, a memory, and a computer program that is stored in the memory and that can run on the processor. When the computer program is run, the network authentication apparatus is enabled to perform the network authentication method in any one of the first aspect or the possible implementations of the first aspect.

For technical effects achieved in any implementation of the fifth aspect, refer to technical effects achieved in different implementations of the first aspect. Details are not described herein again.

According to a sixth aspect, a network authentication apparatus is provided, which can implement the network authentication method in any one of the second aspect or the possible implementations of the second aspect. For example, the network authentication apparatus may be a chip (such as a communication chip) or a device. The foregoing method may be implemented by software, hardware, or hardware executing corresponding software.

In a possible implementation, the network authentication apparatus may include units or modules for performing corresponding actions in the foregoing method.

The network authentication apparatus includes: a transceiver unit, configured to receive a first registration request, where the first registration request includes one or more of the following information: a user equipment identity, a manufacturer identity, a non-public network NPN identity, first indication information, and slice selection assistance information, and the first indication information is for requesting a network to execute an onboarding service; and a processing unit, configured to determine, based on the first indication information, that user equipment requests the network to execute the onboarding service. The transceiver unit is further configured to send a subscription information obtaining request, where the subscription information obtaining request includes one or more of the following information: the user equipment identity, the manufacturer identity, a network identity, the NPN identity, and third indication information, and the third indication information indicates that the network allows execution of the onboarding service for the user equipment, and/or indicates to perform NPN authentication; receive a subscription information obtaining response, where the subscription information obtaining response includes subscription information of the user equipment; and send a first registration response, where the first registration response includes the subscription information of the user equipment.

Optionally, the processing unit is further configured to determine, based on the first registration request, that the network allows execution of the onboarding service for the user equipment.

Optionally, the processing unit is further configured to determine, based on the NPN identity, that the network allows execution of the onboarding service for an NPN corresponding to the NPN identity, and/or determine, based on the user equipment identity and/or the manufacturer identity, that the network allows to perform onboarding service authentication on a device of a manufacturer corresponding to the manufacturer identity; or the transceiver unit is further configured to send a second registration request, where the second registration request includes one or more of the following information: the user equipment identity, the manufacturer identity, the NPN identity, second indication information, and the slice selection assistance information, where the second indication information is for requesting the network to execute the onboarding service; and receive a second registration response, where the second registration response includes the third indication information.

Optionally, the first registration request further includes a first certificate and a first security parameter. The first security parameter is for authenticating validity of the user equipment, and is generated based on one or more of the user equipment identity, the manufacturer identity, a first security key, the network identity, and the NPN identity. The processing unit is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service; and if the verification succeeds, authenticate the first security parameter based on the first security key in the first certificate, to determine that the user equipment is valid; or the transceiver unit is further configured to send a third authentication request, where the third authentication request includes one or more of the following information: the user equipment identity, the manufacturer identity, the first certificate, the NPN identity, fourth indication information, and the first security parameter, where the fourth indication information is for requesting to verify whether the user equipment is valid; and receive a third authentication response, where the third authentication response indicates whether the user equipment is valid.

In still another implementation, the network authentication apparatus includes:
an input interface, an output interface, and a processing circuit. The input interface is configured to input a first registration request, where the first registration request includes one or more of the following information: a user equipment identity, a manufacturer identity, a non-public network NPN identity, first indication information, and slice selection assistance information, and the first indication information is for requesting a network to execute an onboarding service. The processing circuit is configured to determine, based on the first indication information, that user equipment requests the network to execute the onboarding service. The output interface is configured to output a subscription information obtaining request, where the subscription information obtaining request includes one or more of the following information: the user equipment identity, the manufacturer identity, a network identity, the NPN identity, and third indication information, and the third indication information indicates that the network allows execution of the onboarding service for the user equipment, and/or indicates to perform NPN authentication. The input interface is further configured to input a subscription information obtaining response, where the subscription information obtaining response includes subscription information of the user equipment. The output interface is further configured to output a first registration response, where the first registration response includes the subscription information of the user equipment.

Optionally, the processing circuit is further configured to determine, based on the first registration request, that the network allows execution of the onboarding service for the user equipment.

Optionally, the processing circuit is further configured to determine, based on the NPN identity, that the network allows execution of the onboarding service for an NPN corresponding to the NPN identity, and/or determine, based on the user equipment identity and/or the manufacturer identity, that the network allows to perform onboarding service authentication on a device of a manufacturer corresponding to the manufacturer identity; or the output interface is further configured to output a second registration request, where the second registration request includes one or more of the following information: the user equipment identity, the manufacturer identity, the NPN identity, second indication information, and the slice selection assistance information, where the second indication information is for requesting the network to execute the onboarding service. The input interface is further configured to input a second registration response, where the second registration response includes the third indication information.

Optionally, the first registration request further includes a first certificate and a first security parameter. The first security parameter is for authenticating validity of the user equipment, and is generated based on one or more of the user equipment identity, the manufacturer identity, a first security key, the network identity, and the NPN identity. The processing circuit is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service; and if the verification succeeds, authenticate the first security parameter based on the first security key in the first certificate, to determine that the user equipment is valid; or the output interface is further configured to send a third authentication request, where the third authentication request includes one or more of the following information: the user equipment identity, the manufacturer identity, the first certificate, the NPN identity, fourth indication information, and the first security parameter, where the fourth indication information is for requesting to verify whether the user equipment is valid. The input interface is further configured to input a third authentication response, where the third authentication response indicates whether the user equipment is valid.

In still another possible implementation, the network authentication apparatus includes a processor. The processor is configured to perform the network authentication method in any one of the second aspect or the possible implementations of the second aspect.

In still another possible implementation, the network authentication apparatus includes a processor configured to execute a program stored in a memory. When the program is executed, the network authentication apparatus is enabled to perform the network authentication method in any one of the second aspect or the possible implementations of the second aspect.

For example, the network authentication apparatus further includes a memory coupled to the at least one processor.

For example, the memory is located outside the network authentication apparatus.

For example, the network authentication apparatus further includes a communication interface, and the communication interface is used by the network authentication apparatus to communicate with another device. The communication interface may be a transceiver, an input/output interface, a circuit, or the like.

In still another possible implementation, the network authentication apparatus includes a processor, a memory, and a computer program that is stored in the memory and that can run on the processor. When the computer program is run, the network authentication apparatus is enabled to perform the network authentication method in any one of the second aspect or the possible implementations of the second aspect.

For technical effects achieved in any implementation of the fifth aspect, refer to technical effects achieved in different implementations of the second aspect. Details are not described herein again.

According to a seventh aspect, a network authentication apparatus is provided, which can implement the network authentication method in any one of the third aspect or the possible implementations of the third aspect. For example, the network authentication apparatus may be a chip (such as a communication chip) or a device. The foregoing method may be implemented by software, hardware, or hardware executing corresponding software.

In a possible implementation, the network authentication apparatus may include units or modules for performing corresponding actions in the foregoing method.

The network authentication apparatus: a transceiver unit, configured to receive a subscription information obtaining request, where the subscription information obtaining request includes one or more of the following information: a user equipment identity, a manufacturer identity, a network identity, a non-public network NPN identity, and third indication information, where the third indication information indicates that a network allows execution of an onboarding service for user equipment, and/or indicates to perform NPN authentication; and a processing unit, configured to determine an address of a provisioning server of an NPN based on the NPN identity. The transceiver unit is further configured to send a subscription information configuration request, where the subscription information configuration request includes one or more of the following information: the user equipment identity, the manufacturer identity, a first certificate, and the NPN identity; receive a subscription information configuration response, where the subscription information configuration response includes subscription information of the user equipment; and send a subscription information obtaining response, where the subscription information obtaining response includes the subscription information of the user equipment.

Optionally, the transceiver unit is further configured to receive a second registration request, where the second registration request includes one or more of the following information: the user equipment identity, the manufacturer identity, the NPN identity, second indication information, and slice selection assistance information, where the second indication information is for requesting the network to execute the onboarding service. The processing unit is further configured to determine, based on the second registration request, that the network allows execution of the onboarding service for the user equipment. The transceiver unit is further configured to send a second registration response, where the second registration response includes the third indication information.

Optionally, the second registration request further includes the first certificate and a first security parameter. The first security parameter is for authenticating validity of the user equipment, and is generated based on one or more of the user equipment identity, the manufacturer identity, a first security key, the network identity, and the NPN identity. The processing unit is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service; and if the verification succeeds, authenticate the first security parameter based on the first security key in the first certificate, to determine that the user equipment is valid.

Optionally, the transceiver unit is further configured to receive a second security parameter obtaining request, where the second security parameter obtaining request includes one or more of the following information: the user equipment identity, the manufacturer identity, the NPN identity, and the network identity. The processing unit is further configured to generate a second security parameter based on one or more of the user equipment identity, the manufacturer identity, the NPN identity, the network identity, and a second security key. The transceiver unit is further configured to send a second security parameter obtaining response, where the second security parameter obtaining response includes the second security parameter and a second certificate.

Optionally, the transceiver unit is further configured to receive a network authentication result notification, where the network authentication result notification includes one or more of the following information: the user equipment identity, an indication indicating the network to confirm execution of the onboarding service, a result of mutual authentication between the user equipment and the network, and the NPN identity; and forward the network authentication result notification.

In another possible implementation, the network authentication apparatus includes an input interface, an output interface, and a processing circuit. The input interface is configured to input a subscription information obtaining request, where the subscription information obtaining request includes one or more of the following information: a user equipment identity, a manufacturer identity, a network identity, a non-public network NPN identity, and third indication information, where the third indication information indicates that a network allows execution of an onboarding service for user equipment, and/or indicates to perform NPN authentication. The processing circuit is configured to determine an address of a provisioning server of an NPN based on the NPN identity. The output interface is configured to output a subscription information configuration request, where the subscription information configuration request includes one or more of the following information: the user equipment identity, the manufacturer identity, a first certificate, and the NPN identity. The input interface is further configured to input a subscription information configuration response, where the subscription information configuration response includes subscription information of the user equipment. The output interface is further configured to output a subscription information obtaining response, where the subscription information obtaining response includes the subscription information of the user equipment.

Optionally, the input interface is further configured to input a second registration request, where the second registration request includes one or more of the following information: the user equipment identity, the manufacturer identity, the NPN identity, second indication information, and slice selection assistance information, where the second indication information is for requesting the network to execute the onboarding service. The processing circuit is further configured to determine, based on the second registration request, that the network allows execution of the onboarding service for the user equipment. The output interface is further configured to output a second registration response, where the second registration response includes the third indication information.

Optionally, the second registration request further includes the first certificate and a first security parameter. The first security parameter is for authenticating validity of the user equipment, and is generated based on one or more of the user equipment identity, the manufacturer identity, a first security key, the network identity, and the NPN identity. The processing circuit is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service; and if the verification succeeds, authenticate the first security parameter based on the first security key in the first certificate, to determine that the user equipment is valid.

Optionally, the input interface is further configured to input a second security parameter obtaining request, where the second security parameter obtaining request includes one or more of the following information: the user equipment identity, the manufacturer identity, the NPN identity, and the network identity. The processing circuit is further configured to generate a second security parameter based on one or more of the user equipment identity, the manufacturer identity, the NPN identity, the network identity, and a second security key. The output interface is further configured to output a second security parameter obtaining response, where the second security parameter obtaining response includes the second security parameter and a second certificate.

Optionally, the input interface is further configured to input a network authentication result notification, where the network authentication result notification includes one or more of the following information: the user equipment identity, an indication indicating the network to confirm execution of the onboarding service, a result of mutual authentication between the user equipment and the network, and the NPN identity. The output interface is further configured to output the network authentication result notification.

In still another possible implementation, the network authentication apparatus includes a processor. The processor is configured to perform the network authentication method in any one of the third aspect or the possible implementations of the third aspect.

In still another possible implementation, the network authentication apparatus includes a processor configured to execute a program stored in a memory. When the program is executed, the network authentication apparatus is enabled to perform the network authentication method in any one of the third aspect or the possible implementations of the third aspect.

For example, the network authentication apparatus further includes a memory coupled to the at least one processor.

For example, the memory is located outside the network authentication apparatus.

For example, the network authentication apparatus further includes a communication interface, and the communication interface is used by the network authentication apparatus to communicate with another device. The communication interface may be a transceiver, an input/output interface, a circuit, or the like.

In still another possible implementation, the network authentication apparatus includes a processor, a memory, and a computer program that is stored in the memory and that can run on the processor. When the computer program is run, the network authentication apparatus is enabled to perform the network authentication method in any one of the third aspect or the possible implementations of the third aspect.

For technical effects achieved in any implementation of the seventh aspect, refer to technical effects achieved in different implementations of the third aspect. Details are not described herein again.

According to an eighth aspect, a network authentication apparatus is provided, which can implement the network authentication method in any one of the fourth aspect or the possible implementations of the fourth aspect. For example, the network authentication apparatus may be a chip (such as a communication chip) or a device. The foregoing method may be implemented by software, hardware, or hardware executing corresponding software.

In a possible implementation, the network authentication apparatus may include units or modules for performing corresponding actions in the foregoing method.

A network allows user equipment to use an onboarding service, and/or the user equipment is valid. The network authentication apparatus includes: a transceiver unit, configured to: receive a subscription information configuration request, where the subscription information configuration request includes one or more of the following information: a user equipment identity, a manufacturer identity, a first certificate, and a non-public network NPN identity; a processing unit, configured to verify correctness of the first certificate based on a root certificate of a manufacturer; and/or verify whether an NPN corresponding to the NPN identity is consistent with an NPN on which the user equipment requests for onboarding. The transceiver unit is further configured to: if the verification succeeds, send a subscription information configuration response, where the subscription information configuration response includes subscription information of the user equipment.

Optionally, the transceiver unit is further configured to: send a second authentication request, where the second authentication request includes a fourth security parameter and/or a third certificate, and the fourth security parameter is generated based on one or more of the user equipment identity, the manufacturer identity, the NPN identity, a network identity, and a third security key; receive a response to the second authentication request, where the response to the second authentication request includes the first certificate and/or a first security parameter, and the first security parameter is generated based on one or more of the user equipment identity, the manufacturer identity, the first security key, the network identity, and the NPN identity. The processing unit is further configured to verify correctness of the first certificate based on the root certificate of the manufacturer; and if the verification is correct, verify the fourth security parameter based on the first security key in the first certificate.

Optionally, the transceiver unit is further configured to receive a network authentication result notification, where the network authentication result notification includes one or more of the following information: the user equipment identity, an indication indicating the network to confirm execution of the onboarding service, and a result of mutual authentication between the user equipment and the network.

In another possible implementation, the network authentication apparatus includes: an input interface, an output interface, and a processing circuit. A network allows user equipment to use an onboarding service, and/or the user equipment is valid. The input interface is configured to input a subscription information configuration request, where the subscription information configuration request includes one or more of the following information: a user equipment identity, a manufacturer identity, a first certificate, and a non-public network NPN identity. The processing circuit is configured to verify correctness of the first certificate based on a root certificate of a manufacturer; and/or verify whether an NPN corresponding to the NPN identity is consistent with an NPN on which the user equipment requests for onboarding. The output interface is further configured to: if the verification succeeds, output a subscription information configuration response, where the subscription information configuration response includes subscription information of the user equipment.

Optionally, the output interface is further configured to output a second authentication request, where the second authentication request includes a fourth security parameter and/or a third certificate, and the fourth security parameter is generated based on one or more of the user equipment identity, the manufacturer identity, the NPN identity, a network identity, and a third security key. The input interface is further configured to input a response to the second authentication request, where the response to the second authentication request includes the first certificate and/or a first security parameter, and the fourth security parameter is generated based on one or more of the user equipment identity, the manufacturer identity, a first security key, the network identity, and the NPN identity. The processing circuit is further configured to verify correctness of the first certificate based on a root certificate of a manufacturer; and if the verification is correct, verify the fourth security parameter based on the first security key in the first certificate.

Optionally, the input interface is further configured to input a network authentication result notification, where the network authentication result notification includes one or more of the following information: the user equipment identity, an indication indicating the network to confirm execution of the onboarding service, a result of mutual authentication between the user equipment and the network, and the NPN identity.

In still another possible implementation, the network authentication apparatus includes a processor. The processor is configured to perform the network authentication method in any one of the fourth aspect or the possible implementations of the fourth aspect.

In still another possible implementation, the network authentication apparatus includes a processor configured to execute a program stored in a memory. When the program is executed, the network authentication apparatus is enabled to perform the network authentication method in any one of the fourth aspect or the possible implementations of the fourth aspect.

For example, the network authentication apparatus further includes a memory coupled to the at least one processor.

For example, the memory is located outside the network authentication apparatus.

For example, the network authentication apparatus further includes a communication interface, and the communication interface is used by the network authentication apparatus to communicate with another device. The communication interface may be a transceiver, an input/output interface, a circuit, or the like.

In still another possible implementation, the network authentication apparatus includes a processor, a memory, and a computer program that is stored in the memory and that can run on the processor. When the computer program is run, the network authentication apparatus is enabled to perform the network authentication method in any one of the fourth aspect or the possible implementations of the fourth aspect.

For technical effects achieved in any implementation of the eighth aspect, refer to technical effects achieved in different implementations of the fourth aspect. Details are not described herein again.

According to a ninth aspect, a network authentication system is provided, including the network authentication apparatuses in the fifth aspect to the eighth aspect.

According to a tenth aspect, a computer-readable storage medium is provided. The computer-readable storage medium includes a computer program. When the computer program is run on a computer, the method according to any one of the foregoing aspects or implementations of the aspects is performed.

According to an eleventh aspect, a computer program product is provided. When the computer program product runs on a computer, the method according to any one of the foregoing aspects or implementations of the aspects is performed.

According to a twelfth aspect, a computer program is provided. When the computer program is run on a computer, the method according to any one of the foregoing aspects or implementations of the aspects is performed.

### BRIEF DESCRIPTION OF DRAWINGS

FIG. 1 is a schematic architectural diagram of an eNPN;
FIG. 2 is a schematic architectural diagram of a communication system to which a network authentication method is applied according to an embodiment of this application;
FIG. 3 is a schematic diagram of a service oriented interface-based non-roaming architecture of a fifth generation mobile communication network;
FIG. 4 is a schematic diagram of a reference point-based non-roaming architecture of a fifth generation mobile communication network;
FIG. 5A and FIG. 5B are a schematic flowchart of a network authentication method according to an embodiment of this application;
FIG. 6 is a schematic flowchart of a network authentication method according to an embodiment of this application;
FIG. 7A and FIG. 7B are a schematic flowchart of a network authentication method according to an embodiment of this application;
FIG. 8 is a schematic flowchart of a network authentication method according to an embodiment of this application;
FIG. 9A and FIG. 9B are a schematic flowchart of a network authentication method according to an embodiment of this application;
FIG. 10 is a schematic diagram of a structure of a network authentication apparatus according to an embodiment of this application;
FIG. 11 is another schematic diagram of a structure of a network authentication apparatus according to an embodiment of this application;
FIG. 12 is still another schematic diagram of a structure of a network authentication apparatus according to an embodiment of this application;
FIG. 13 is still another schematic diagram of a structure of a network authentication apparatus according to an embodiment of this application; and
FIG. 14 is still another schematic diagram of a structure of a network authentication apparatus according to an embodiment of this application.

### DESCRIPTION OF EMBODIMENTS

The following describes embodiments of this application with reference to the accompanying drawings in embodiments of this application.

The technical solutions in embodiments of this application may be applied to various communication systems, for example, an enhanced long term evolution (enhanced long term evolution, eLTE) system, a 5th generation (5th generation, 5G) system, or a new radio (new radio, NR) system. The 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (Internet of Things, IoT) communication system, or another communication system.

FIG. 2 is a schematic architectural diagram of a communication system to which a network authentication method is applied according to an embodiment of this application. As shown in FIG. 2, the communication system 100 includes user equipment 11, a mobility management network element 12, an authentication server 13, a certificate server 14, a unified data management network element 15, and a provisioning server 16. A network element or an entity corresponding to the mobility management network element 12 may be an access and mobility management function (access and mobility management function, AMF) entity or the like in the 5G mobile communication system. This is not specifically limited in this embodiment of this application. The foregoing devices and network elements may directly communicate with each other, or may communicate with each other through forwarding by another device or network element. This is not specifically limited in this embodiment of this application. Although not shown, the communication system may further include another network element. This is not specifically limited in this embodiment of this application.

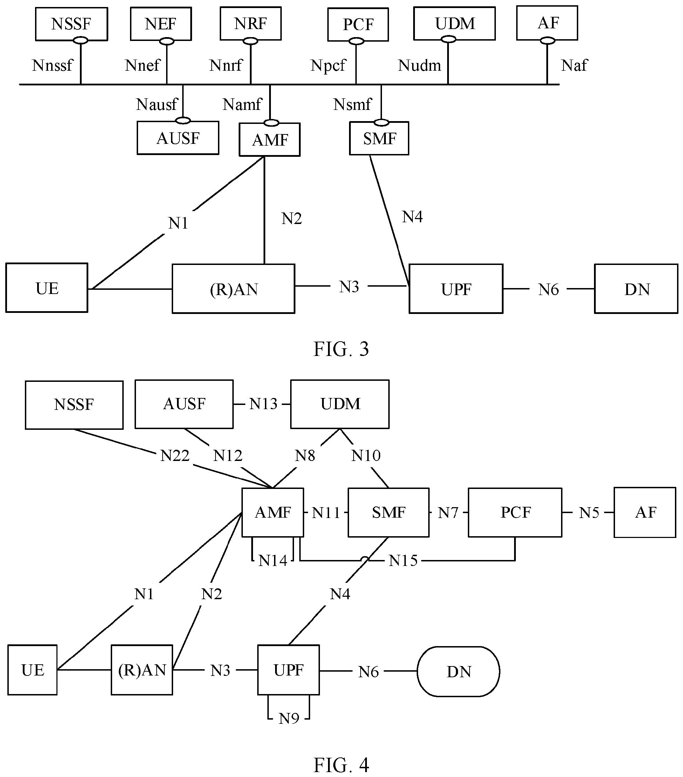

Specifically, a service oriented interface-based non-roaming architecture of a fifth generation mobile communication network shown in FIG. 3 and a reference point-based non-roaming architecture of a fifth generation mobile communication network shown in FIG. 4 are used as examples. The communication system mainly includes an AMF entity, a session management function (Session Management Function, SMF) entity, a user plane function (user plane function, UPF) entity, a network exposure function (network exposure function, NEF) entity, and an application function (application function, AF) entity. The communication system may further include a policy control function (policy control function, PCF) entity, a unified data repository (unified data repository, UDR) function entity, and a unified data management (unified data management, UDM) function entity. It should be noted that function entities and functions of the function entities shown in FIG. 3 and FIG. 4 may be the same. In the service oriented interface-based architecture shown in FIG. 3, a message sent by a function entity to another function entity needs to include an identity of the another function entity, whereas in the reference point-based architecture shown in FIG. 4, a message between function entities is an interface-based message, which does not need to include an identity of a function entity.

The functions of the function entities in FIG. 3 and FIG. 4 are as follows:

The AMF entity is mainly responsible for signaling processing, for example, functions such as access control, mobility management, attachment and detachment, and gateway selection. When providing a service for a session in a terminal, the AMF entity provides control plane storage resources for the session, to store a session identity, an SMF entity identity associated with the session identity, and the like.

The SMF entity is mainly responsible for session management, and is specifically responsible for user plane function entity selection, user plane function entity redirection, internet protocol (internet protocol, IP) address assignment, bearer establishment, modification, and release, and quality of service (quality of service, QoS) control.

The UPF entity is responsible for forwarding and receiving of user data in the terminal. The UPF entity may receive user data from a data network, and transmit the user data to the terminal through an access network device. Further, the UPF entity may receive user data from the terminal through the access network device, and forward the user data to the data network. A transmission resource and a scheduling function in the UPF entity that provide a service for the terminal are managed and controlled by the SMF entity.

The NEF entity mainly supports secure interaction between a 3 GPP network and a third-party application. The NEF can securely expose a network capability and an event to the third-party application, to enhance or improve quality of service of the application. The 3GPP network can also securely obtain related data from the third-party application, to enhance intelligent decision-making of the network. In addition, the function entity supports restoring structured data from the UDR or storing structured data into the UDR.

The AF entity mainly supports interacting with the 3GPP network to provide a service, for example, affecting a data routing decision and a policy control function, or providing some business services (these services may be third-party (3^{rd} party) services or may not be third-party services) to a network side.

The PCF entity mainly supports providing a unified policy framework to control network behavior, and providing a policy rule to a control layer network function, and is responsible for obtaining policy-related subscription information of a subscriber.

The UDR entity is mainly responsible for storing structured data, and stored content includes subscription data and policy data, externally exposed structured data, and application-related data.

The UDM entity is mainly configured to manage subscription information of the subscriber.

It should be noted that each foregoing function entity is only a name, and the name does not constitute a limitation on the entity. For example, the session management function entity may be replaced with a "session management function" or another name. In addition, the session management function entity may correspond to an entity that includes another function in addition to the session management function. The user plane function entity may be replaced with a "user plane function" or another name. In addition, the user plane function entity may correspond to an entity that includes another function in addition to the user plane function. This is uniformly described herein, and details are not described below.

A user device accesses a network via a radio access network (radio access network, RAN) device or an access network (access network, AN) device. The RAN device is mainly a wireless network device in the 3GPP network, and the AN device may be an access network device defined in non-3GPP.

Optionally, the user device in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), or a handheld device or a computing device that has a wireless communication function, another processing device connected to a wireless modem, an vehicle-mounted device, or a wearable device, a user device in a future 5G network, a user device in a future evolved public land mobile network (public land mobile network, PLMN), a user device in a future Internet of Vehicles, or the like. This is not limited in embodiments of this application.

By way of example but not limitation, in embodiments of this application, the user device may be a mobile phone, a tablet computer, a computer having a wireless transceiver function, a virtual reality user device, an augmented reality user device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

By way of example but not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include fullfeatured and large-size devices that can implement all or some functions without depending on smartphones, such as smart watches or smart glasses, and devices that focus on only one type of application and need to work with other devices such as smartphones, such as various smart bands or smart jewelry for monitoring physical signs.

In addition, the user device in embodiments of this application may alternatively be a user device in the Internet of Things (internet of things, IoT) system. IoT is an important part of development of future information technologies. A main technical feature of the IoT is to connect an object to a network by using a communication technology, to implement an intelligent network of human-machine interconnection and thing-thing interconnection. In embodiments of this application, an IoT technology may implement massive connections, deep coverage, and terminal power saving by using, for example, a narrow band (narrow band, NB) technology.

In addition, in embodiments of this application, the user device may further include sensors such as a smart printer, a train detector, and a gas station. Main functions include collecting data (some user devices), receiving control information and downlink data of an access network device, sending an electromagnetic wave, and transmitting uplink data to the access network device.

Optionally, the access network device in embodiments of this application may be any communication device that has a wireless transceiver function and that is configured to communicate with the user device. The access network device includes but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a TRP. Alternatively, the access network device may be a gNB, a TRP, or a TP in the 5G system, or one or a group of (including a plurality of antenna panels) antenna panels of a base station in the 5G system. In addition, the access network device may alternatively be a network node included in a gNB or a TP, for example, a BBU or a distributed unit (distributed unit, DU).

In some deployments, a gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the access network device may be a device including one or more of a CU node, a DU node, and an AAU node.

Optionally, the access network device and the user device in embodiments of this application may communicate with each other over a licensed spectrum, or may communicate with each other over an unlicensed spectrum, or may communicate with each other over both a licensed spectrum and an unlicensed spectrum. The access network device and the user device may communicate with each other over a spectrum below 6 gigahertz (gigahertz, GHz), or may communicate with each other over a spectrum above 6 GHz, or may communicate with each other over both a spectrum below 6 GHz and a spectrum above 6 GHz. Spectrum resources used between the access network device and the user device 101 are not limited in embodiments of this application.

Optionally, the user device, the access network device, or a location management device in embodiments of this application may be deployed on land, and include an indoor, outdoor, handheld, or a vehicle-mounted device; may be deployed on water; or may be deployed on an airplane, a balloon and a satellite in the air. An application scenario of the user device, the access network device, or the location management device is not limited in embodiments of this application.

Optionally, in embodiments of this application, the user device, the access network device, or the location management device includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (also referred to as a main memory). The operating system may be any one or more types of computer operating systems for implementing service processing through processes (process), for example, a Linux operating system, a Unix operating system, an Android operating system, an iOS operating system, or a Windows operating system. The application layer includes applications such as a browser, an address book, word processing software, and instant messaging software. Moreover, embodiments of this application do not specifically limit a specific structure of an execution body of a method provided in embodiments of this application, provided that the execution body can run a program that record code of the method provided in embodiments of this application, to perform communication according to the method provided in embodiments of this application. For example, the execution body of the method provided in embodiments of this application may be the user device, the access network device, or the location management device, or a functional module that can invoke and execute a program in the user device, the access network device, or the location management device.

In other words, related functions of the user device, the access network device, or the location management device in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

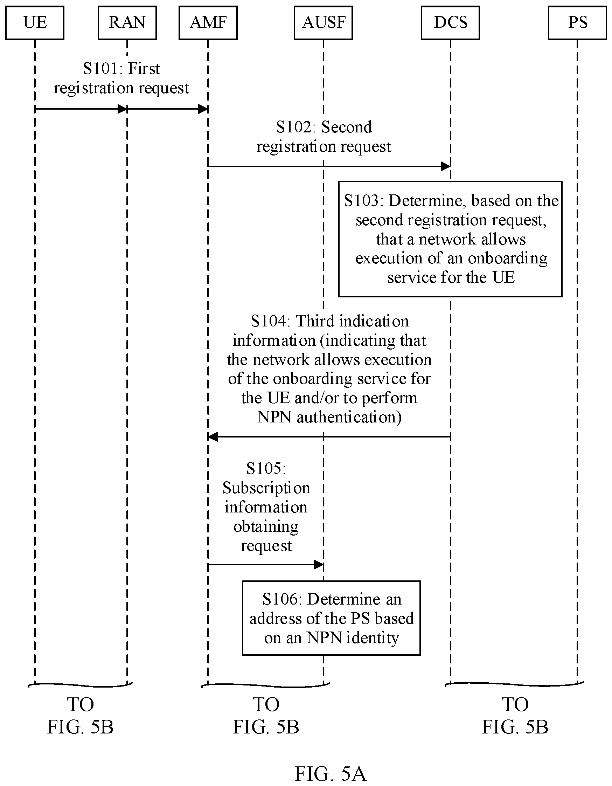

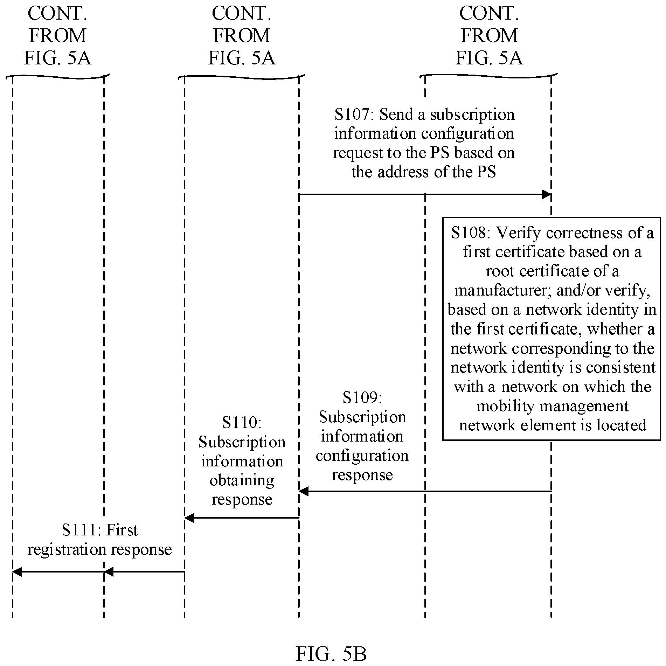

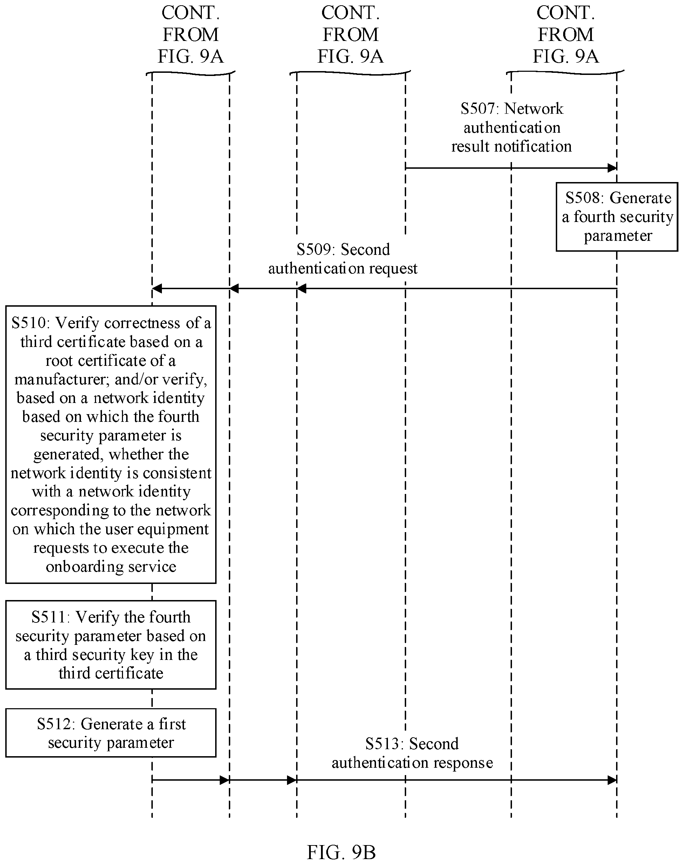

The following describes a network authentication method provided in embodiments of this application with reference to FIG. 5 A and FIG. 5B to FIG. 9A and FIG. 9B.

It should be noted that names of messages between network elements, names of parameters in the messages, or the like in the following embodiments of this application are merely examples, and there may alternatively be other names during specific implementation. This is not specifically limited in embodiments of this application.

FIG. 5A and FIG. 5B are a schematic flowchart of a network authentication method according to an embodiment of this application. In this embodiment, it is assumed that UE does not include identity information issued by an operator. For example, the UE does not have a universal subscriber identity module (universal subscriber identity module, USIM) card, and has only a first security key and an identity (a user equipment identity (user equipment identity, UE ID)) that are preset by a manufacturer at delivery. The method may include the following steps:

S101: The UE sends a first registration request to an AMF via a RAN. The first registration request includes one or more of the following information: a user equipment identity (user equipment identity, UE ID), a manufacturer identity, a non-public network (non-public network, NPN) identity, first indication information (indicator1), and slice selection assistance information. The first indication information is for requesting a network to execute an onboarding service.

In a scenario, because the UE may not have a USIM card, the UE cannot register with an NPN via the network. Therefore, the UE may first need to request the network to execute the onboarding service. Therefore, the first registration request includes the first indication information. The first indication information is for requesting the network to execute the onboarding service. The network may be a visited network or a home network. For example, the UE may send the first registration request to network elements such as an AMF, an AUSF, a UDM, and a DCS. In this embodiment, an example in which the first registration request is sent to the AMF is used for description.

In addition, the first registration request may include the UE ID. The UE ID may include a host ID, a MAC address, a subject (subject) name, and the like. The subject name refers to content of a subject field (subject field) in a first certificate. Alternatively, the UE ID may include two parts. One part is for identifying the UE, and the other part is for identifying a manufacturer. The UE ID may be in a NAI format.

The first registration request may further include the manufacturer identity. The manufacturer identity is for uniquely identifying a manufacturer that produces the UE.

The first registration request may further include the NPN identity. The NPN identity is a unified name of information about the NPN. The information about the NPN includes information for identifying the NPN, such as the NPN identity, a domain name of the NPN, and an IP address of the NPN.

The first registration request may further include the first certificate. The first certificate is a certificate issued by the manufacturer to the UE at delivery, to indicate that the UE is a device legally produced by the manufacturer. The first certificate includes a PK1 and a certificate issuer identity. The first certificate may further include a network identity, the manufacturer identity, the NPN ID, and the like. Herein, the certificate issuer identity may be the manufacturer identity, indicating that the certificate is issued by the manufacturer. Herein, the certificate issuer identity is also an identity of a certificate authority. If the first certificate includes the manufacturer identity and the like, the first registration request may not include the manufacturer identity and the like. The first certificate may include the network identity for limiting that the device is used to access only a network corresponding to the NPN ID.

The first registration request may further include slice selection assistance information for indicating slice information that the UE intends to access, or for indicating that the onboarding service needs to be executed.

S102: The AMF sends a second registration request to the DCS. The second registration request includes one or more of the following information: the user equipment identity, the manufacturer identity, the NPN identity, the first indication information (indicator1), and the slice selection assistance information. The first indication information is for requesting the network to execute the onboarding service.

The second registration request may further include the first certificate. The first certificate is a certificate issued by the manufacturer to the UE at delivery, to prove that the UE is a device legally produced by the manufacturer.

S103: After receiving the second registration request, the DCS determines, based on the second registration request, that the network allows execution of the onboarding service for the UE.

In an implementation, after receiving the second registration request, the DCS may determine, based on the NPN identity, that the network allows execution of the onboarding service for an NPN corresponding to the NPN identity.

In another implementation, after receiving the second registration request, the DCS may alternatively determine, based on the user equipment identity and/or the manufacturer identity, that the network allows execution of the onboarding service for a device of a manufacturer corresponding to the manufacturer identity.

In still another implementation, after receiving the second registration request, the DCS may alternatively verify correctness of the first certificate based on a preconfigured root certificate of the manufacturer. In addition, whether the network identity in the first certificate is the same as a connection identity corresponding to the AMF connected to the DCS may be further verified. If the verification succeeds, subsequent steps are performed; otherwise, the subsequent steps are not performed.

In still another implementation, after receiving the second registration request, the DCS may alternatively determine, based on the slice selection assistance information, that the network allows execution of the onboarding service for the device.

In still another implementation, the DCS may alternatively request another network element to determine whether the network allows execution of the onboarding service for the UE. Specifically, for example, the DCS sends a third registration request to the UDM, the AUSF, or the AMF, where the third registration request includes one or more of the following information: the user equipment identity, the manufacturer identity, the NPN identity, and second indication information (indicator2). The second indication information is for requesting the network to execute the onboarding service. After determining, based on one or more of the user equipment identity, the manufacturer identity, and the NPN identity, whether to allow execution of the onboarding service for the UE, the another network element sends a third registration response to the DCS, where the third registration response is for determining that the network executes the onboarding service. In this way, the DCS may determine that the network executes the onboarding service.

In another embodiment, in addition to determining, by the DCS, whether the network allows execution of the onboarding service for the UE, a network element such as the AMF, the AUSF, or the UDM may alternatively determine whether to execute the onboarding service for the UE. If the AMF, the AUSF, and the UDM are network elements of an operator, when verifying the first certificate, the AMF, the AUSF, and the UDM verify whether network identities of the AMF, the AUSF, and the UDM are consistent with the network identity in the first certificate.

S104: The DCS sends third indication information (indicators) to the AMF, where the third indication information indicates that execution of the onboarding service for the UE is allowed.

After the network determines to execute the onboarding service, the DCS may further determine, based on at least one of the user equipment identity, the manufacturer identity, the non-public network NPN identity, the slice selection assistance information, and the first certificate, whether NPN authentication, that is, authentication between the UE and an operator network, needs to be performed by using step S103, and send an authentication indication to the AMF. The authentication indication may be independent of the third indication information, or the authentication indication may be included in the third indication information.

S105: After receiving the third indication information, the AMF sends a subscription information obtaining request to the AUSF. The subscription information obtaining request includes one or more of the following information: the user equipment identity, the manufacturer identity, the NPN identity, an authentication result for execution of the onboarding service by the network, and the first certificate.

To register with the NPN, the UE needs to obtain subscription information of the UE. Therefore, after receiving the third indication information, the AMF sends the subscription information obtaining request to the AUSF, where the subscription information obtaining request includes the UE identity and the authentication result for execution of the onboarding service by the network. The authentication result for execution of the onboarding service by the network indicates that the network allows execution of the onboarding service for the UE.

In another embodiment, the AMF may send a subscription information obtaining request to the UDM, and then the UDM requests subscription information of the UE from the PS; or the AMF sends a subscription information obtaining request to the AUSF, the AUSF sends the subscription information obtaining request to the UDM, and then the UDM obtains subscription information of the UE from the PS; or the AMF sends a subscription information obtaining request to the DCS, and then the DCS obtains subscription information of the UE from the PS.

S106: The AUSF determines an address of the PS based on the NPN ID.

The AUSF may determine the address of the PS of the NPN based on the NPN ID included in the subscription information obtaining request.

S107: The AUSF sends a subscription information configuration request to the PS based on the address of the PS. The subscription information configuration request includes one or more of the following information: the user equipment identity, the manufacturer identity, and the first certificate.

After obtaining the address of the PS, the AUSF sends the subscription information configuration request to the PS, to request the PS to configure the subscription information of the UE.

The subscription information configuration request includes the UE ID and the manufacturer identity, and may further include the first certificate.

S108: After receiving the subscription information configuration request, the PS verifies correctness of the first certificate based on a root certificate of the manufacturer; and/or verifies, based on the network identity in the first certificate, whether a network corresponding to the network identity is consistent with a network in which the AUSF network element is located.

After receiving the subscription information configuration request, the PS verifies correctness of the first certificate based on the preconfigured root certificate of the manufacturer.

The first certificate may further include information such as the network identity. If the first certificate is correct, the PS may further verify, based on the network identity in the first certificate, whether the network corresponding to the network identity is consistent with a network on which the network element requesting to obtain the subscription information is located, that is, verify whether the network allows execution of the onboarding service for the UE is consistent with a network on which the AMF is located.

S109: If the verification succeeds, the PS sends a subscription information configuration response to the AUSF. The subscription information configuration response includes the subscription information of the user equipment.

If the verification succeeds, the PS sends the subscription information configuration response to the AUSF, where the subscription information configuration response includes the subscription information of the user equipment, so that the DCS delivers the subscription information to the UE.

S110: The AUSF sends a subscription information obtaining response to the AMF. The subscription information obtaining response includes the subscription information of the user equipment.

S111: The AMF sends a first registration response to the UE. The first registration response includes the subscription information of the user equipment.

According to the network authentication method provided in this embodiment of this application, when the user equipment does not include identity information issued by a network, the user equipment may request the network to execute the onboarding service, and communicate with the NPN via the network. This improves network communication reliability.

In the embodiment, the AMF may alternatively request the UDM, and then the UDM requests the PS to obtain the subscription information.

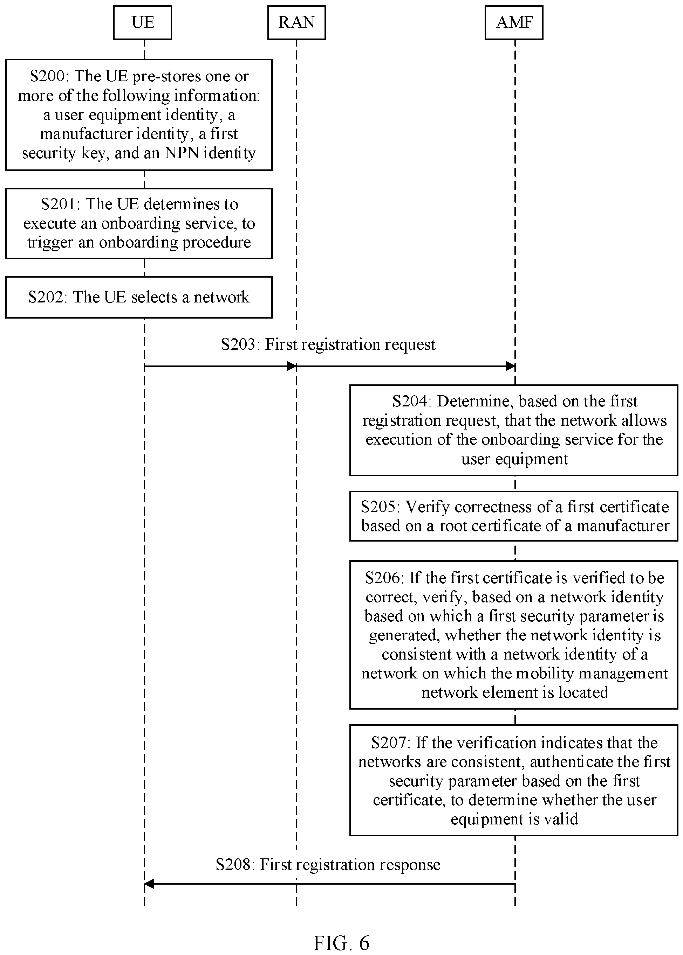

FIG. 6 is another schematic flowchart of a network authentication method according to an embodiment of this application. The method mainly relates to verification on whether a network allows execution of an onboarding service for UE, and may further include authentication on validity of the UE by the network. In this embodiment, it is assumed that the UE does not include identity information issued by an operator. For example, the UE does not have a USIM card, and has only a first security key and an identity that are preset by a manufacturer at delivery. Specifically, the method includes the following steps:

S200: The UE pre-stores one or more of the following information: a user equipment identity, a manufacturer identity, the first security key, slice selection assistance information, and an NPN identity.

The manufacturer preconfigures or stores the user equipment identity, the manufacturer identity, the first security key, or the NPN identity in the UE at delivery. The first security key includes a public key PK1 and a private key SK1, or the first security key includes a shared key K1. For meanings of other information, refer to the foregoing descriptions.

S201. The UE determines to execute the onboarding service, to trigger an onboarding procedure.

S202: The UE selects a network.

Before the UE selects a network, an access network device may further send a broadcast message to the UE, and the UE receives the broadcast message. The broadcast message includes an indication indicating whether a network on which the access network device is located supports an onboarding service, and may further include NPN IDs for which the network executes the onboarding service for users; or may further include slice selection assistance information for which the network executes the onboarding service. In addition, the broadcast message may further include information about the network on which the access network device is located, for example, a network identity.

Then, the UE determines, based on the identity of the UE and the broadcast message, whether the network supports the onboarding service, and may further determine whether the network supports an onboarding service of an NPN. When all the foregoing cases are determined, the UE selects the network to execute the onboarding service.

S203: The UE sends a first registration request to the access network device. After receiving the first registration request, the access network device sends the first registration request to an AMF.

The first registration request may include one or more of the following information: the UE ID, first indication information, the manufacturer identity, and the NPN ID. The first indication information is for requesting the network to execute the onboarding service.

The first registration request may further include a first certificate. The first certificate is a certificate issued by the manufacturer to the UE at delivery, to prove that the UE is a device legally produced by the manufacturer. The first certificate includes the PK1 and a certificate issuer identity. The first certificate may further include a network identity, the manufacturer identity, and the like. Herein, the certificate issuer identity may be the manufacturer identity, indicating that the certificate is issued by the manufacturer. Herein, the certificate issuer identity is also an identity of a certificate authority. If the first certificate includes the manufacturer identity and the like, the first registration request may not include the manufacturer identity and the like. The first certificate may include the network identity for limiting that the device is used to access only a network corresponding to the NPN ID.

The first registration request may further include slice selection assistance information for indicating slice information that the UE intends to access, or for indicating that the onboarding service needs to be executed.

The first registration request may further include a first security parameter (code1). The first security parameter is for authenticating validity of the user equipment. The first security parameter is generated based on one or more of the UE ID, the manufacturer identity, the first security key, the NPN ID, and the network identity. Therefore, optionally, before sending the first registration request, the UE may further generate the first security parameter based on one or more of the UE ID, the manufacturer identity, the first security key, the NPN ID, and the network identity. For example, if the first security parameter is obtained through calculation based on the UE ID, the SK1, the NPN ID, and the network identity, the first security parameter may be referred to as a digital signature. In another example, if the first security parameter is obtained through calculation based on the UE ID, the K1, the NPN ID, and the network identity, the first security parameter may be referred to as a message authentication code. The network identity herein may be an identity of a current network. The current network may be a home network or a visited network. The visited network is a serving network (serving network). If the network identity is an identity of the currently visited network or the serving network, the network identity is a serving network identity (serving network identity, SN ID).

The manufacturer identity may also be included in the UE ID. For example, the UE ID includes a host ID@manufacturer identity. If the UE ID includes the manufacturer identity, the UE does not need to send the manufacturer identity to the AMF.

Information about the NPN ID may also be included in the UE ID. For example, the UE ID includes a host ID@NPN ID. If the UE ID includes the NPN ID, the UE may not need to send the NPN ID to the AMF.

The manufacturer identity and the information about the NPN ID may both be included in the UE ID. For example, the UE ID includes a host ID@manufacturer identity.NPN ID. If the UE ID includes the manufacturer identity and the NPN ID, the UE does not need to send the manufacturer identity and the NPN ID to the AMF.

It may be understood that the first registration request may not include the NPN ID, and the UE may include the NPN ID in another message, for example, access information sent to the access network device. Then, the access network device sends the NPN ID to the AMF. Alternatively, the access network device may determine the NPN ID based on cell information (where a cell is associated with the NPN ID) used by the UE to access the access network device, a used radio channel, or the like, and then the access network device sends the NPN ID to the AMF.

S204: After receiving the first registration request, the AMF determines, based on the first registration request, that the network allows execution of the onboarding service for the user equipment.

In an implementation, after receiving the first registration request, the AMF may determine, based on the NPN identity, that the network allows execution of the onboarding service for an NPN corresponding to the NPN identity.

In another implementation, after receiving the first registration request, the AMF may alternatively determine, based on the manufacturer identity and/or the UE ID, that the network allows to perform onboarding service authentication on a device of a manufacturer corresponding to the manufacturer identity.

In still another implementation, after receiving the first registration request, the AMF may alternatively verify correctness of the first certificate based on a preconfigured root certificate of the manufacturer.

In still another implementation, the AMF may alternatively request another network element to determine whether the network allows execution of the onboarding service for the UE. Specifically, for example, the AMF sends a third registration request to a UDM, an AUSF, or a DCS, where the third registration request includes one or more of the following information: the user equipment identity, the manufacturer identity, the NPN identity, and second indication information. The second indication information is for requesting the network to execute the onboarding service. After determining, based on one or more of the user equipment identity, the manufacturer identity, and the NPN identity, whether to allow execution of the onboarding service for the UE, the another network element sends a third registration response to the AMF, where the third registration response is for determining that the network executes the onboarding service. In this way, the AMF may determine that the network executes the onboarding service. The AMF may further send the first certificate to the another network element, so that the another network element verifies correctness of the first certificate based on the root certificate of the manufacturer. If the verification fails, an indication is sent to the AMF, to indicate that the verification fails and the onboarding service cannot be executed for the UE.

S205: The AMF may further verify correctness of the first certificate based on the root certificate of the manufacturer.

As described above, in this embodiment, the first registration request may further include the first certificate. If the AMF pre-stores the root certificate of the manufacturer, the AMF may verify correctness of the first certificate based on the root certificate of the manufacturer. Alternatively, the AMF sends a request to another network element (for example, the UDM, the AUSF, or the DCS), where the request includes manufacturer information and/or the NPN ID, so that the another network element determines the root certificate of the manufacturer based on the manufacturer information and/or the NPN ID, and returns the root certificate of the manufacturer to the AMF.

S206: If the first certificate is verified to be correct, the AMF may further verify whether a network identity used during calculation of the first security parameter is consistent with a network identity of a network in which the mobility management network element is located.

If the first certificate is correct, and the first registration request may further include the first security parameter, the AMF may further verify whether the network identity used during calculation of the first security parameter is consistent with a network identity corresponding to a network on which the AMF is located, that is, verify whether a network on which the UE requests to execute an onboarding service is consistent with the network on which the AMF is located.

S207: If the verification indicates that the networks are consistent, the AMF authenticates the first security parameter based on the first certificate, to determine whether the user equipment is valid.

If the first security parameter is generated based on one or more of the UE ID, the manufacturer identity, the SK1, the NPN ID, and the network identity, and the first certificate further includes the public key PK1, when verifying that the first certificate is correct, the AMF may further authenticate the first security parameter based on the PK1 in the first certificate, to determine whether the UE is valid.

If the first security parameter is generated based on one or more of the UE ID, the manufacturer identity, K1, the NPN ID, and the network identity, the AMF may verify the first security parameter based on a stored K1 corresponding to the UE ID; or the AMF sends a request to another network element (for example, the UDM, the AUSF, or the DCS), where the request includes at least one of the UE ID, manufacturer information, and the NPN ID, so that the another network element determines the K1 based on at least one of the UE ID, the manufacturer information, and the NPN ID, and returns the K1 to the AMF.

Calculation of the first security parameter further includes information such as the network identity. The AMF may further verify whether the network identity for calculating the first security parameter or for verification is consistent with the network on which the AMF network element is located, that is, verify whether a network identity used by the UE to execute the onboarding service is consistent with the network on which the AMF is located. Alternatively, the AMF participates in verifying the first security parameter based on a network identity of the network on which the AMF is located.

Calculation of the first security parameter further includes the information about the NPN ID. The AMF may further verify the first security parameter based on the received NPN ID.

S208: Optionally, the AMF sends a first registration response to the UE, where the first registration response indicates that the network allows execution of the onboarding service and/or that the user equipment is valid.

By determining that the network allows to execute the onboarding service for the UE, verifying the first certificate, verifying network consistency, and authenticating the first security parameter, the AMF determines that the network allows to execute the onboarding service and the UE is valid. In this case, the AMF sends the response to the first registration request to the UE, to indicate the determining/authentication results.

If determining that the network does not allow execution of the onboarding service for the UE, the AMF may send the first registration response to the UE, to indicate that the registration fails, and no longer perform subsequent procedures. The first registration response may further include a first error code. The first error code specifically indicates that a manufacturer device corresponding to the manufacturer identity or the requested NPN ID is not authorized to execute the onboarding service.

If the AMF fails in verifying the first certificate, the first registration response may indicate that the registration fails. The first registration response may further include a first certificate verification error code, and the first certificate verification error code specifically indicates that the verification on the first certificate fails.

If the AMF fails in authenticating the first security parameter, the first registration response may indicate that the registration fails. The first registration response may further include a second error code, and the second error code specifically indicates that verification on the first security parameter fails.

It may be understood that the subsequent procedure may alternatively be that after receiving the first registration request sent by the UE, the AMF generates a second security parameter based on one or more of the UE ID, the manufacturer identity, the first security key, the NPN ID, and the network identity, and sends a request to the UE, or may further send a second certificate. Herein, the AMF requests the UE to determine whether the network is valid and verifies the second security parameter. The UE verifies correctness of the second certificate based on the root certificate of the manufacturer. If the second certificate is verified to be correct, the UE may further verify, based on a network identity in the second certificate, whether the network identity included in the second certificate is consistent with a network identity of the network on which the AMF is located. The AMF may further verify, based on the network identity in the second security parameter, whether a network identity used for calculation of the second security parameter is consistent with the network identity of the network on which the AMF is located, and authenticate the first security parameter based on the first certificate, to determine that the user equipment is valid. The UE sends a response to the AMF.

According to the network authentication method provided in this embodiment of this application, when the UE does not include identity information issued by a network, the UE executes the onboarding service via the network. This improves network communication reliability.

It may be understood that the foregoing embodiment includes a plurality of possibilities. Verification may be performed by another network element on the UE. For example, the AMF sends content of the first registration message to the AUSF, the DCS, or the UDM, and the AUSF, the DCS, or the UDM triggers a subsequent verification procedure. An NF that performs actions of the AMF herein may not be limited. Further, a base station may perform the actions of the AMF to complete verification on the UE.

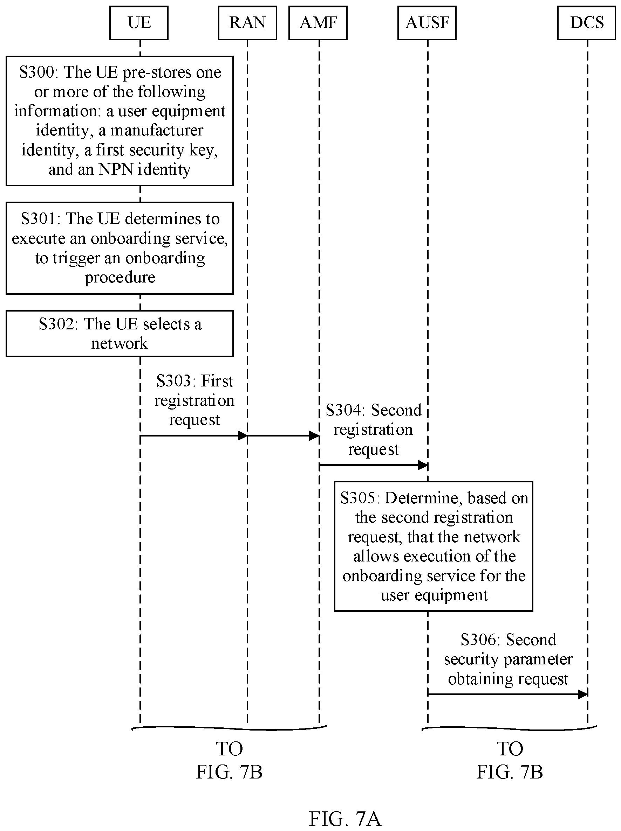

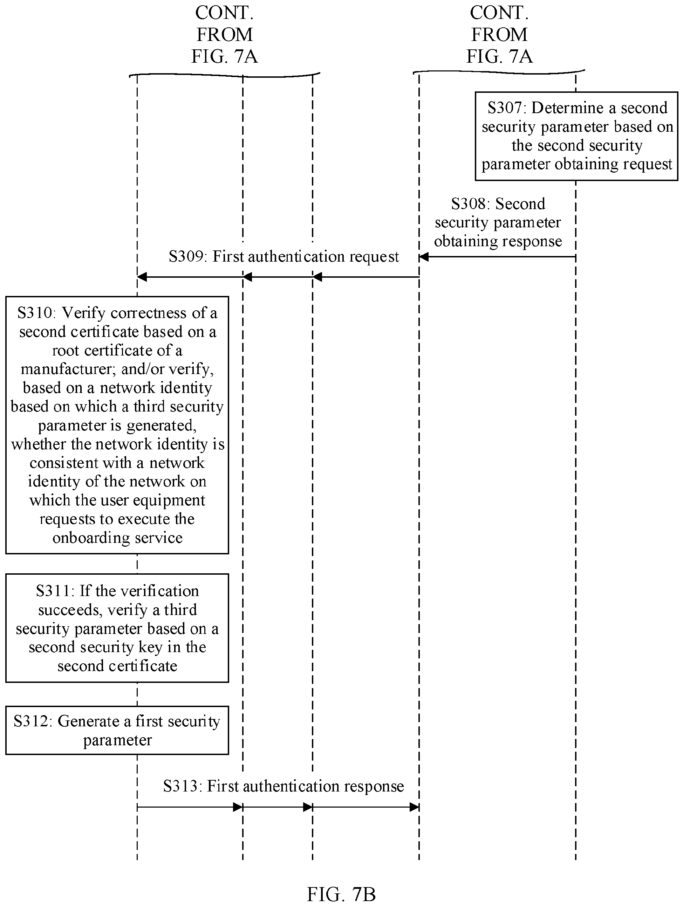

FIG. 7A and FIG. 7B are still another schematic flowchart of a network authentication method according to an embodiment of this application. The method mainly relates to verification on whether a network allows execution of an onboarding service for UE and validity authentication performed by the network on the UE, and further relates to mutual authentication (or referred to as dual authentication) between the network and the UE. In this embodiment, it is assumed that the UE does not include identity information issued by a network. For example, the UE does not have a USIM card, and has only a first security key and an identity that are preset by a manufacturer at delivery. Specifically, the method includes the following steps:

S300: The UE pre-stores one or more of the following information: a user equipment identity, a manufacturer identity, the first security key, and an NPN identity.

For specific implementation of this step, refer to step S200 in the embodiment shown in FIG. 6.

S301: The UE determines to execute an onboarding service, to trigger an onboarding procedure.

For specific implementation of this step, refer to step S201 in the embodiment shown in FIG. 6.

S302: The UE selects a network.

For specific implementation of this step, refer to step S202 in the embodiment shown in FIG. 6.

S303: The UE sends a first registration request to an AMF via a RAN.

S304: The AMF sends a second registration request to an AUSF.

The UE needs to access the AUSF via the AMF. Because actions are mainly performed by the AUSF, to avoid repeated description herein, descriptions of the AMF are reduced.

S305: After receiving the second registration request, the AUSF determines, based on the second registration request, that the network allows execution of the onboarding service for the user equipment.

Further, the AUSF determines whether to perform authentication between the UE and the network. For specific implementation of this step, refer to step S102 in the embodiment shown in FIG. 5A or step S204 in the embodiment shown in FIG. 6. A difference lies in that, in this embodiment, the AUSF determines that the network allows execution of the onboarding service for the UE.

Optionally, the first registration request may further include a first security parameter. The AUSF may further verify the first security parameter with reference to steps S205 to 207 in the embodiment shown in FIG. 6.

S306: The AUSF sends a second security parameter obtaining request to a DCS, where the second security parameter obtaining request includes one or more of the following information: the UE identity, an SN identity, and the manufacturer identity.

When it is determined that the network executes the onboarding service and/or the UE is valid, further, in this embodiment, mutual authentication between the UE and the network is further triggered.

If the AUSF stores a second certificate and/or a second security key (a PK2 and an SK2, or a K1) issued by the manufacturer, the AUSF may directly perform step S309 without performing steps S307 and S308. To be specific, the AUSF may generate a second security parameter based on one or more of the UE ID, the manufacturer identity, the NPN identity, the network identity, and the second security key.

If the AUSF does not store the second certificate and the second security key, the AUSF requests, from the DCS, a parameter related to authentication on the UE, where the request includes the manufacturer identity. Certainly, the AUSF may alternatively request, from another network element, to obtain a parameter related to authentication on the UE.

If an asymmetric authentication manner is used, the DCS determines, based on the manufacturer identity, the parameter related to authentication on the UE. The parameter related to authentication on the UE includes the second certificate, the PK2, and the SK2, and may further include the UE ID. The DCS sends the parameter to the AUSF. Then, the AUSF generates the second security parameter based on one or more of the UE ID, the manufacturer identity, the NPN identity, the network identity, the PK2, and the SK2.

If a symmetric authentication manner is used, the DCS determines, based on the manufacturer identity, a parameter related to authentication on the UE. The parameter related to authentication on the UE includes the K1, and may further include the UE ID. The DCS sends the parameter to the AUSF. Then, the AUSF generates the second security parameter based on one or more of the UE ID, the manufacturer identity, the NPN identity, the network identity, and the K1.

Alternatively, the UE may send authentication manner indication information to the AMF, and then the AMF sends the authentication manner indication information to the AUSF. The AUSF determines, based on the authentication manner indication information, a specific authentication manner to be used, and further performs the foregoing different operations. The authentication manner includes the asymmetric authentication manner and the symmetric authentication manner, and certainly may also be another authentication manner.

Certainly, alternatively, the UE may send the UE ID and the manufacturer identity to the AMF, and then the AMF sends the UE ID and the manufacturer identity to the DCS. The DCS determines a specific authentication manner to be used.

S307: The DCS determines the second security parameter based on the second security parameter obtaining request.

The second security parameter obtaining request includes at least one of the UE identity, the manufacturer identity, and the network identity. The DCS may determine the second certificate based on the manufacturer identity and/or the network identity. If the asymmetric authentication manner is used, the DCS may determine, based on the UE identity, that the second security parameter includes the PK2 and the SK2. If the symmetric authentication manner is used, the DCS may determine, based on the UE identity, that the second security parameter includes the K1.

In addition, the second security parameter obtaining request may further include the network identity. Further, the DCS verifies whether the network identity is consistent with a network identity of a network to which the UE requests access.

S308: The DCS sends a second security parameter obtaining response to the AUSF.

The second security parameter obtaining response includes the second certificate and/or the second authentication parameter (the SK2 or the K1).

S309: The AUSF sends a first authentication request to the UE, where the first authentication request requests the user equipment to authenticate the network, and the first authentication request includes a third security parameter and/or the second certificate. The third security parameter is calculated based on the SK2 or the K1. For a specific calculation manner, refer to the foregoing embodiment.

The AUSF sends the first authentication request to the UE, to request the UE to authenticate the network. The first authentication request includes the third security parameter and the second certificate.

S310: The UE verifies correctness of the second certificate based on a root certificate of a manufacturer; and/or verifies, based on the network identity based on which the third security parameter is generated, whether the network identity is consistent with a network identity of the network on which the user equipment requests to execute the onboarding service.

After receiving the first authentication request, the UE first verifies correctness of the second certificate based on the root certificate of the manufacturer pre-stored by the UE.

If the second certificate is correct, further, it may be verified, based on the network identity based on which the third security parameter is generated, whether a network corresponding to the network identity is consistent with the network on which the UE requests to execute the onboarding service. If the networks are inconsistent, the UE fails in verifying the network.

If the second certificate is incorrect, the UE does not perform subsequent S311 and S312, and sends a first authentication response, where the first authentication response indicates that the network verification fails.

S311: If the verification succeeds, the UE verifies the third security parameter based on the second security key in the second certificate.

When the second certificate is verified to be correct, the first authentication parameter may be verified based on the second security key in the second certificate.

Specifically, if the third security parameter includes a digital signature, the third security parameter may be verified based on the PK2 included in the second certificate; or if the third security parameter includes a message authentication code, the second security parameter may be verified based on the K1 stored in the UE.

S312: The UE generates the first security parameter based on one or more of the user equipment identity, the manufacturer identity, the first security key, the network identity, and the NPN identity.

After the UE verifies that the second certificate is correct, the networks are consistent, and the verification on the second security parameter succeeds, the UE successfully authenticates the network. Then, the UE calculates the second authentication parameter, so that the network authenticates the UE.

Similar to the manner of generating the third security parameter, manners of generating the first security parameter also include the asymmetric authentication manner and the symmetric authentication manner. To be specific, if the asymmetric authentication manner is used, the UE may calculate the first security parameter based on the SK1. If the symmetric authentication manner is used, the UE may calculate the first security parameter based on the K1.

S313: The UE sends the first authentication response, where the first authentication response includes a first certificate and/or the first security parameter.

Correspondingly, the AUSF receives the first authentication response, and performs a process the same as the process of authenticating the network by the UE, to authenticate the UE. Specifically, the AUSF verifies correctness of the first certificate based on the root certificate of the manufacturer; and/or verifies, based on the network identity based on which the first security parameter is generated, whether a network corresponding to the network identity is consistent with the network on which the user equipment requests to execute the onboarding service, and then, if the verification succeeds, the AUSF verifies the first security parameter based on the first security key in the first certificate. If all the verification succeeds, authentication performed by the network on the UE succeeds.

In an alternative embodiment, after S306, that is, after determining the second security parameter, the DCS calculates the third security parameter. The DCS may not send the second security parameter obtaining response to the AUSF, but send the first authentication request to the UE via the AUSF, and then the AUSF receives the first authentication response sent by the UE. To be specific, the DCS is an authentication node for bidirectional authentication between the UE and the network.

Further, the AUSF may further send a network authentication result notification to a PS, to notify a result of mutual authentication between the UE and the network. The notification message herein includes the UE ID and an authentication result, and may further include the network identity and the NPN ID. In this way, when the PS subsequently authenticates the registration of the UE with the NPN, or when the UE and the PS perform mutual authentication, the result of mutual authentication between the UE and the network may be queried based on the UE ID. Alternatively, the AUSF may send the result to the UDM, and then the UDM notifies the PS of the result. Herein, the content notified by the UDM to the PS may include the UE ID and the authentication result, and may further include the network identity.

Alternatively, the foregoing procedure provides an authentication manner for the UE and the AUSF. Herein, authentication between the UE and the AUSF may alternatively be performed according to another EAP or in an existing 5G authentication manner. This is not limited.

According to the network authentication method provided in this embodiment of this application, when the UE does not include identity information issued by the network, the UE executes the onboarding service via the network, and the UE and the network perform mutual authentication. This improves network communication reliability.

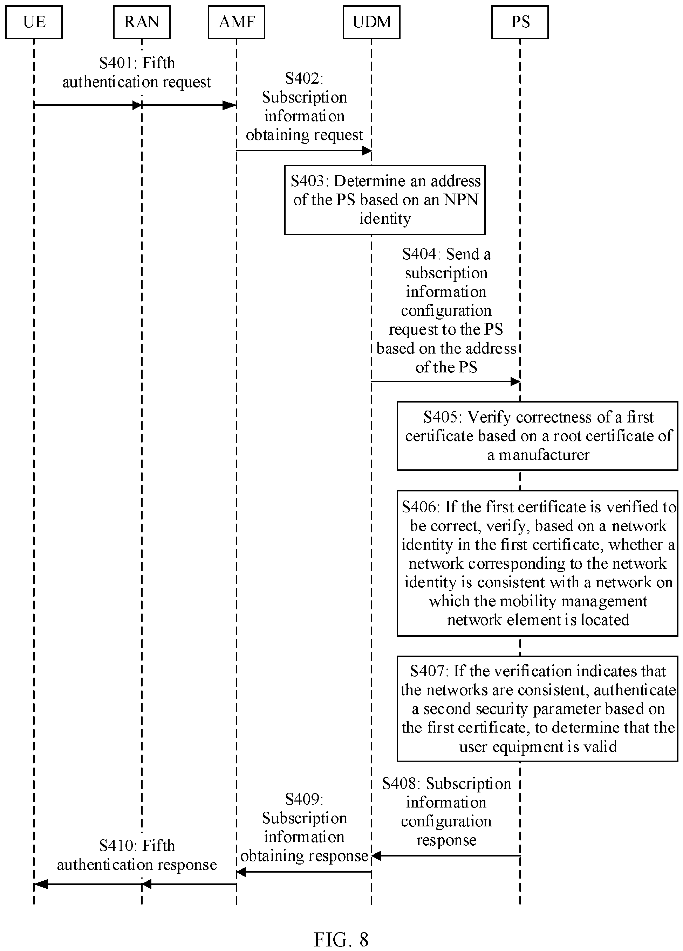

FIG. 8 is still another schematic flowchart of a network authentication method according to an embodiment of this application. The method mainly relates to authentication performed by a PS on registration of UE with an NPN. In this embodiment, it is assumed that the UE does not include identity information issued by an operator. For example, the UE does not have a USIM card, and has only a first security key and an identity that are preset by a manufacturer at delivery. Specifically, the method includes the following steps:

S401: The UE sends a fifth authentication request to an AMF, where the fifth authentication request includes at least one of a UE ID, fourth indication information (indicator4), a manufacturer identity, and an NPN ID. The fourth indication information is for requesting to register with the NPN, to obtain subscription information of the UE. Optionally, the fifth authentication request may further include a first certificate and a first security parameter (code1). The first security parameter is generated based on one or more of the UE ID, the manufacturer identity, the first security key, a network identity, and the NPN ID.

In this embodiment, it is assumed that it has been confirmed that a network allows the user equipment to use an onboarding service, and/or the first security parameter is valid. After the UE accesses the network, the network can establish a logical channel between the UE and a PS. Specifically, the UE sends the fifth authentication request to the AMF, and the UE requests to register with the NPN, to obtain the subscription information of the UE. The UE may send the fifth authentication request via a non-access stratum (non-access stratum, NAS) message. The NAS message may be specifically an initial registration NAS message, a NAS security mode complete message, a context NAS message, or the like. This is not limited in this application.

S402: The AMF sends a subscription information obtaining request to a UDM.

After receiving the fifth authentication request, the AMF sends the subscription information obtaining request to the UDM. The subscription information obtaining request includes one or more of the following information: the UE ID, fourth indication information, the manufacturer identity, the NPN ID, and the first security parameter.

Optionally, after receiving the fifth authentication request, the AMF may preliminarily verify a second security parameter. In this case, the fourth indication information may further indicates that the AMF has verified the first security parameter.

S403: After receiving the subscription information obtaining request, the UDM determines an address of the PS based on the NPN ID.

Optionally, if the AMF does not complete the verification on the first security parameter, the UDM may preliminarily verify the first security parameter. In this case, the subscription information obtaining request may further include the fourth indication information, indicating that the UDM has verified the first security parameter.

Optionally, if fifth indication information is received, it is indicated that the AMF has verified the first security parameter, and the UDM no longer verifies the first security parameter.

For a specific verification method, refer to the foregoing embodiment.

S404: The UDM sends a subscription information configuration request to the PS based on the address of the PS, where the subscription information configuration request includes one or more of the following information: the user equipment identity, the manufacturer identity, a first certificate, the network identity, the first security parameter, and the NPN ID.

Correspondingly, the PS receives the subscription information configuration request.

S405: The PS verifies correctness of the first certificate based on a root certificate of a manufacturer.

If the PS pre-stores the root certificate of the manufacturer, the PS may verify correctness of the first certificate based on the root certificate of the manufacturer.

S406: If the first certificate is verified to be correct, the PS may further verify, based on the network identity in the first certificate, whether a network corresponding to the network identity is consistent with a network identity corresponding to a network with which the PS is communicating.

If the first certificate further includes information such as the network identity, and if the first certificate is correct, the PS may further verify, based on the network identity in the first certificate, whether the network corresponding to the network identity is consistent with a network on which a network element requesting to execute the onboarding service is located, or the PS may further verify, based on the network identity based on which the first security parameter is generated, whether the network corresponding to the network identity is consistent with a network on which a network element requesting to execute the onboarding service is located. To be specific, it is verified whether a network on which the UE is allowed to execute the onboarding service is consistent with a network on which the AMF or the UDM is located.

S407: If the verification indicates that the networks are consistent, the PS authenticates the first security parameter based on the first certificate, to determine whether the user equipment is valid.

The first certificate further includes a public key PK1. Therefore, when verifying that the first certificate is correct, the PS may authenticate the first security parameter based on the PK1 in the first certificate, to determine whether the UE is valid. The first security parameter is generated based on one or more of the UE ID, the manufacturer identity, an SK1, the NPN ID, and the network identity.

If the first security parameter is generated based on one or more of the UE ID, the manufacturer identity, a K1, the NPN ID, and the network identity, the PS may determine the K1 based on the UE ID, to verify the first security parameter.

If calculation of the first security parameter further includes information such as the network identity, the PS may further verify whether the network identity for calculating the first security parameter or for verification is consistent with the network identity corresponding to the network with which the PS is communicating, that is, verify whether the network identity used by the UE to execute the onboarding service is consistent with the network identity corresponding to the network with which the PS is communicating. Alternatively, the PS participates in verifying the first security parameter based on the network identity of the network with which the PS is communicating.

Calculation of the first security parameter further includes information about the NPN ID. The PS may further verify the first security parameter based on the received NPN ID.

Optionally, herein, the PS may alternatively send the received parameter to another NF for verification, for example, a DCS. A specific manner is sending at least one of parameters in a subscription configuration information request to the DCS, and the DCS verifies the first certificate and/or correctness of the first security parameter, and returns a result to the PS. Then, the PS may further perform verification based on another network identity in S406 and S407.

Optionally, herein, the PS may further send at least one of the parameters in the subscription configuration information request to another NF (for example, the DCS), the root certificate of the manufacturer, or the K1, to perform subsequent verification in S406 and S407.

S408: The PS sends a subscription information configuration response to the UDM, where the subscription information configuration response includes the subscription information of the user equipment.

The PS determines, through the foregoing authentication, that the UE is valid. Alternatively, the PS may send the subscription information configuration response to the UDM, to indicate an authentication result. The authentication result includes authentication success or authentication failure.

S409: The UDM sends a subscription information obtaining response to the AMF.

The subscription information obtaining response includes the subscription information of the user equipment and/or the authentication result.

S410: The AMF sends a fifth authentication response to the UE.

The fifth authentication response includes the subscription information of the user equipment and/or the authentication result.

Herein, the UE may further verify the network identity.

In another embodiment, the UDM, the DCS, or the AUSF first sends, to the PS, an indication indicating that authentication of the UE in the network succeeds, including the UE ID and the authentication result. If the PS determines, based on the received UE ID, that the UE has been successfully authenticated in the network, authentication between the PS and the UE is skipped.

Alternatively, after receiving the UE ID, the PS requests an NF such as the UDM, the DCS, or the AUSF to obtain an authentication result corresponding to the UE ID. If the PS determines that the UE has been successfully authenticated in the network, authentication between the PS and the UE is skipped.

In another embodiment, step S401 does not mean that the UE initiates the fifth authentication request. Instead, based on the foregoing embodiment, the AMF or the AUSF directly triggers subsequent interaction with the PS.

Alternatively, the PS may send a third security parameter and a corresponding parameter to the UE by using the method for calculating the third security parameter by the AUSF in the embodiment corresponding to FIG. 7A and FIG. 7B, so that the UE verifies whether the PS is a valid PS. Herein, content protected by the third security parameter further includes the subscription information of the user equipment.

According to the network authentication method provided in this embodiment of this application, when the user equipment does not include the identity information issued by the network, if the network has determined that onboarding authentication can be performed on the user equipment, the user equipment may request, via the network, the PS to authenticate the UE. This improves reliability of the NPN.

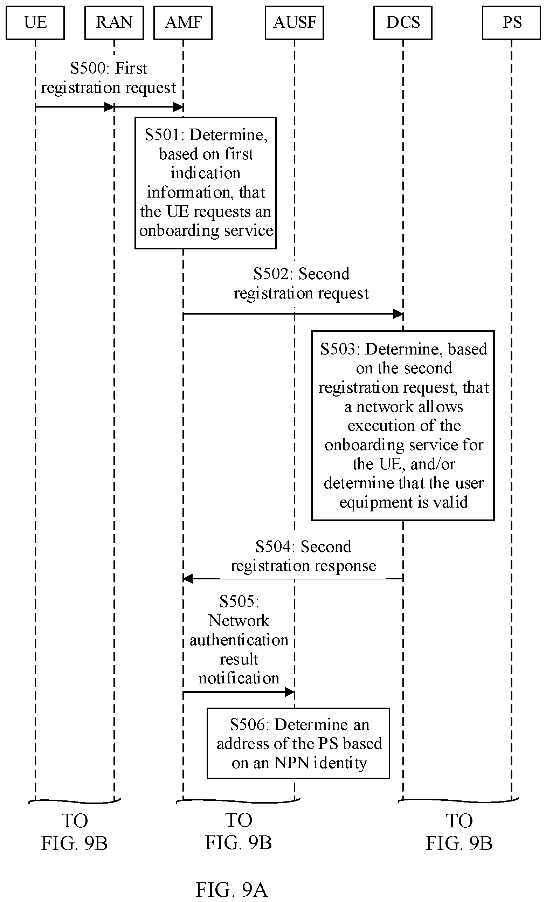

FIG. 9A and FIG. 9B are still another schematic flowchart of a network authentication method according to an embodiment of this application. The method mainly relates to mutual authentication between a PS and UE. In this embodiment, it is assumed that the UE does not include identity information issued by a network. For example, the UE does not have a USIM card, and stores only a first security key and an identity that are preset by a manufacturer at delivery. Specifically, the method includes the following steps:

S500: The UE sends a first registration request to an AMF via a RAN, where the first registration request includes one or more of the following information: a user equipment identity, a manufacturer identity, an NPN identity, first indication information, and slice selection assistance information, and the first indication information is used to request a network to execute an onboarding service.

Optionally, the first registration request may further include a first certificate and a first security parameter.

For specific implementation of this step, refer to step S101 in the embodiment shown in FIG. 5A.

S501: The AMF determines, based on the first indication information, that the UE requests the onboarding service.

S502: The AMF sends a second registration request to a DCS, where the second registration request includes one or more of the following information: the user equipment identity, the manufacturer identity, the NPN identity, the first indication information, and the slice selection assistance information, and the first indication information is used to request the network to execute the onboarding service.

S503: After receiving the second registration request, the DCS determines, based on the second registration request, that the network allows execution of the onboarding service for the UE, and/or determines that the user equipment is valid.

For specific implementation of this step, refer to step S102 in the embodiment shown in FIG. 5 A.

S504: The DCS sends a second registration response to the AMF, where the second registration response includes third indication information, the third indication information indicates that the network allows execution of the onboarding service for the user equipment, and/or the third indication information further indicates to perform NPN authentication.

If determining that the network can execute the onboarding service, the DCS sends the third indication information, to indicate that the network allows execution of the onboarding service for the user equipment, and may further indicate the AMF to execute a next procedure, that is, indicate to perform NPN authentication. If determining that the network cannot execute the onboarding service, the DCS may send a first registration response to the AMF, to indicate that the registration fails, and subsequent procedures are ended.

S505: After receiving the second registration response, the AMF sends a network authentication result notification to an AUSF.

The network authentication result notification includes one or more of the following information: the user equipment identity, an indication indicating the network to confirm execution of the onboarding service, a result of mutual authentication between the user equipment and the network, and the NPN identity.

S506: The AUSF determines an address of the PS based on the NPN ID.

The AUSF may determine the address of the PS of the NPN based on the NPN ID.

S507: The AUSF forwards the network authentication result notification to the PS.

The network authentication result notification may be an AAA protocol message.

S508: The PS generates a fourth security parameter.

The PS may determine a third certificate based on the manufacturer identity. The PS may generate the fourth security parameter based on one or more of the user equipment identity, the manufacturer identity, the NPN identity, the network identity, and a third security key. Specifically, if an asymmetric authentication manner is used, the PS may determine, based on the UE identity, that the third security key includes a PK2 and an SK2. If a symmetric authentication manner is used, the PS may determine, based on the UE identity, that the third security key includes a K1.

S509: The PS sends a second authentication request to the UE, where the second authentication request requests the user equipment to authenticate the NPN, and the second authentication request includes the fourth security parameter and/or the third certificate.

The PS sends the second authentication request to the UE, to request the UE to authenticate the NPN. The second authentication request includes the fourth security parameter and the third certificate.

S510: The UE verifies correctness of the third certificate based on a root certificate of a manufacturer; and/or verifies, based on the network identity based on which the fourth security parameter is generated, whether the network identity is consistent with a network identity corresponding to the network on which the user equipment requests to execute the onboarding service; and/or verifies, based on the NPN identity based on which the fourth security parameter is generated, whether the NPN identity is consistent with an NPN identity corresponding to the NPN on which the user equipment requests for onboarding.

After receiving the second authentication request, the UE first verifies correctness of the third certificate based on the root certificate of the manufacturer pre-stored by the UE.

If the third certificate is correct, further, it may be verified, based on the network identity based on which the fourth security parameter is generated, whether the network corresponding to the network identity is consistent with the network on which the UE requests to execute the onboarding service. Further, it may be further verified, based on the NPN identity based on which the fourth security parameter is generated, whether the NPN identity is consistent with the NPN identity corresponding to the NPN on which the user equipment requests for onboarding.

S511: If the verification succeeds, the UE verifies the fourth security parameter based on the third security key in the third certificate.

When the second certificate is verified to be correct, the fourth security parameter may be verified based on the third security key in the third certificate.

Specifically, if calculation of the fourth security parameter is based on the asymmetric cryptography method, the third security parameter may be verified based on the PK2 included in the third certificate. If calculation of the fourth security parameter is based on a symmetric cryptography method, the third security parameter may be verified based on the K1.

S512: The UE generates the first security parameter.

After the UE verifies that the third certificate is correct, the networks are consistent, and the verification on the third security parameter succeeds, the UE successfully authenticates the NPN. Then, the UE generates the first security parameter, so that the network authenticates the UE.

Similar to the manner of generating the third security parameter, manners of generating the first security parameter also include the asymmetric authentication manner and the symmetric authentication manner. To be specific, if the asymmetric authentication manner is used, the UE may determine that the first security key includes a PK1 and an SK1. If the symmetric authentication manner is used, the UE may determine that the first security key includes the K1. For a specific process of generating the first security parameter, refer to the description in the foregoing embodiment.

S513: The UE sends a second authentication response, where the second authentication response includes the first certificate and/or the first security parameter.

Correspondingly, the PS receives the second authentication response, and performs a process the same as the process of authenticating the network by the UE, to authenticate the UE. Specifically, the PS verifies correctness of the first certificate based on the root certificate of the manufacturer; and/or verifies, based on a network identity based on which the first security parameter is generated, whether the network identity is consistent with the network identity corresponding to the network on which the user equipment requests to execute the onboarding service; and/or verifies, based on an NPN identity based on which the first security parameter is generated, whether the NPN identity is consistent with the NPN identity corresponding to the NPN on which the user equipment requests for onboarding. Then, if the verification succeeds, the PS verifies the first security parameter based on the first security key in the first certificate. If all the verification succeeds, authentication performed by the network on the UE succeeds.

Subsequently, the PS delivers the subscription information of the user equipment to the UE.

In the foregoing embodiment, the PS may request the DCS to obtain the root certificate of the manufacturer to verify a certificate sent by the UE or the second certificate, or the SK1 and the K1 are used to calculate the fourth security parameter. This is not limited. For a manner of obtaining a corresponding certificate or key herein, refer to the foregoing embodiment. Details are not described again.

Herein, authentication between the UE and the PS is not limited, and may be an authentication method disclosed in EAP or the like, for example, secondary authentication or slice authentication.

According to the network authentication method provided in this embodiment of this application, mutual authentication between the NPN and the UE is implemented, and reliability of communication between the NPN and the UE is improved.

It may be understood that the foregoing provides a scenario in which the UE communicates with the PS via the AUSF or the UDM. A manner of connecting the UE to the PS is not limited herein. For example, the UE communicates with the PS via the AMF, or the UE communicates with the PS via the AMF/AUSF/UDM and an NEF.

It may be understood that the foregoing provides two types of authentication between the UE and the operator network and authentication between the UE and the PS. The two authentication manners herein may be of combination. For example, after authentication between the UE and the operator network is performed, authentication between the UE and the PS may still be performed. Authentication between the UE and the PS may be performed in a registration procedure, or may be performed after a registration procedure is completed, or may be performed in a session setup procedure, or may be performed after a user plane is set up. This is not limited.

It may be understood that the PS may be deployed inside or outside the operator network. In addition, subscription information distributed by the PS may be for NPN access in the future. Herein, the NPN (for example, a public network integrated, public network integrated NPN, PNI-NPN) may be deployed inside or outside the operator network. In addition, the subscription information herein may be understood as an identity and a key. The subscription information may further include slice information, for example, the slice selection assistance information. The subscription information herein may be used to perform authentication such as secondary authentication or slice authentication performed by the operator network. This is not limited.

It may be understood that whether the UE has an identity of an operator is not limited in the foregoing embodiment. This section highlights how the UE is authorized to access the onboarding service and how to complete authentication. Whether the UE has the identity of the operator, whether the UE sends the identity of the operator, and the like are not limited.

It may be understood that in the foregoing embodiments, the methods and operations implemented by a network authentication apparatus may alternatively be implemented by a component (for example, a chip or a circuit) that can be used in the network authentication apparatus.

The foregoing mainly describes the solutions provided in embodiments of this application from the perspective of interaction between network elements. Correspondingly, an embodiment of this application further provides an apparatus, and the apparatus is configured to implement the foregoing methods. The apparatus may be the network authentication apparatus in the foregoing method embodiments, or an apparatus including the foregoing network authentication apparatus. It may be understood that, to implement the foregoing functions, the apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, or may be other division during actual implementation.

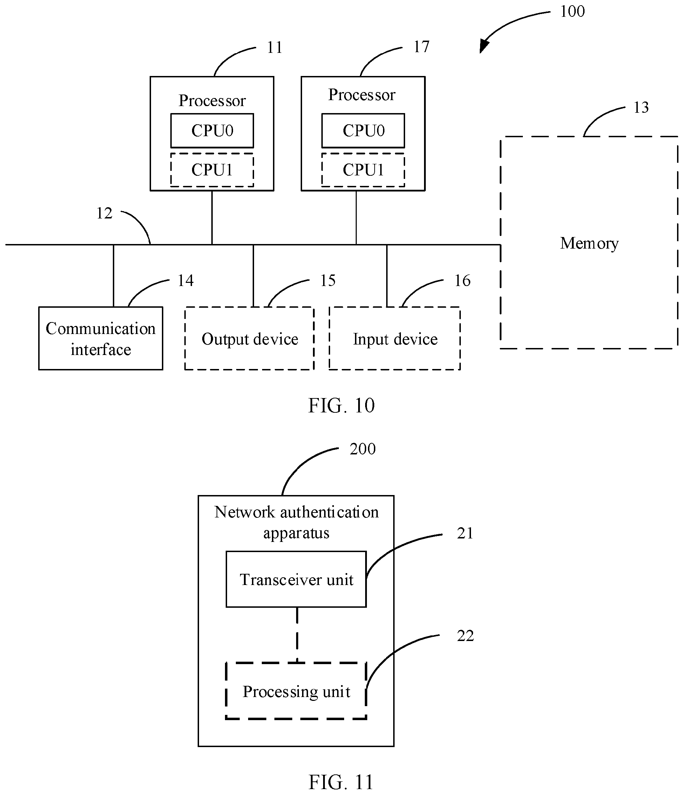

Related functions of the network authentication apparatus in embodiments of this application may be implemented by using a network authentication apparatus 100 in FIG. 10. FIG. 10 is a schematic diagram of a structure of the network authentication apparatus 100 according to an embodiment of this application. The network authentication apparatus 100 includes one or more processors 11, a communication line 12, and at least one communication interface (in FIG. 10, an example in which only a communication interface 14 and one processor 11 are included is used for description). Optionally, the network authentication apparatus 100 may further include a memory 13.

The processor 11 may be a CPU, a microprocessor, an application-specific integrated circuit (application-specific integrated circuit, ASIC), or one or more integrated circuits for controlling program execution of the solutions of this application.

The communication line 12 may include a path for connecting different components.

The communication interface 14 may be a transceiver module, configured to communicate with another device or a communication network, such as the Ethernet, a RAN, or a wireless local area network (wireless local area network, WLAN). For example, the transceiver module may be an apparatus such as a transceiver. Optionally, the communication interface 14 may alternatively be a transceiver circuit located inside the processor 11, for signal input and signal output of the processor.

The memory 13 may be an apparatus having a storage function. For example, the memory 13 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of an instruction or a data structure and that can be accessed by a computer. However, this is not limited thereto. The memory may exist independently, and is connected to the processor through the communication line 12. The memory may alternatively be integrated with the processor.

The memory 13 is configured to store computer-executable instructions for performing the solutions in this application, and the processor 11 controls execution. The processor 11 is configured to execute the computer-executable instructions stored in the memory 13, to implement the network authentication method provided in embodiments of this application.

Alternatively, in this embodiment of this application, the processor 11 may implement a processingrelated function in the network authentication method provided in the following embodiment of this application, and the communication interface 14 may be responsible for communicating with the another device or the communication network. This is not specifically limited in this embodiment of this application.

The computer-executable instructions in this embodiment of this application may also be referred to as application program code. This is not specifically limited in this embodiment of this application.

In specific implementation, in an embodiment, the processor 11 may include one or more CPUs, such as a CPU0 and a CPU1 in FIG. 10.

During specific implementation, in an embodiment, the network authentication apparatus 100 may include a plurality of processors, for example, the processor 11 and a processor 17 in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network authentication apparatus 100 may further include an output device 15 and an input device 16. The output device 15 communicates with the processor 11 and may display information in a plurality of manners.

The network authentication apparatus 100 may be a general-purpose apparatus or a dedicated apparatus. For example, the network authentication apparatus 100 may be a desktop computer, a portable computer, a network server, a personal digital assistant (personal digital assistant, PDA), a mobile phone, a tablet computer, a wireless user device, an embedded device, or a device having a structure similar to that in FIG. 10. A type of the network authentication apparatus 100 is not limited in this embodiment of this application.

FIG. 11 is another schematic diagram of a structure of a network authentication apparatus according to an embodiment of this application. The network authentication apparatus may be the user equipment in the foregoing embodiments. The network authentication apparatus 200 includes a transceiver unit 21 and may further include a processing unit 22.

The transceiver unit 21 is configured to send a first registration request, where the first registration request includes one or more of the following information: a user equipment identity, a manufacturer identity, a non-public network NPN identity, first indication information, and slice selection assistance information, and the first indication information is for requesting a network to execute an onboarding service. The transceiver unit 21 is further configured to receive a first registration response, where the first registration response includes subscription information of the user equipment.

Optionally, the first registration request further includes a first certificate and a first security parameter. The first security parameter is for authenticating validity of the user equipment. The apparatus further includes a processing unit 22, configured to generate the first security parameter based on one or more of the user equipment identity, the manufacturer identity, a first security key, a network identity, and the NPN identity.

Optionally, the transceiver unit 21 is further configured to receive a first authentication request, where the first authentication request requests the user equipment to authenticate the network, the first authentication request includes a third security parameter and/or a second certificate, and the third security parameter is generated based on one or more of the user equipment identity, the manufacturer identity, a second security key, the network identity, and the NPN identity. The processing unit 22 is further configured to verify correctness of the second certificate based on a root certificate of a manufacturer; and/or verify, based on the network identity based on which the third security parameter is generated, whether the network identity is consistent with a network identity of the network on which the user equipment requests to execute the onboarding service; if the verification succeeds, verify the third security parameter based on the second security key in the second certificate; and if the verification succeeds, generate the first security parameter based on one or more of the user equipment identity, the manufacturer identity, the first security key, the network identity, and the NPN identity. The transceiver unit 21 is further configured to send a first authentication response, where the first authentication response includes the first certificate and/or the first security parameter.

Optionally, if the network allows the user equipment to use the onboarding service, and/or the first security parameter is valid, the transceiver unit 21 is further configured to receive a second authentication request from a provisioning server, where the second authentication request includes a fourth security parameter and/or a third certificate, and the fourth security parameter is generated based on one or more of the user equipment identity, the manufacturer identity, the NPN identity, the network identity, and a third security key. The processing unit 22 is further configured to verify correctness of the third certificate based on the root certificate of the manufacturer; and if the verification is correct, verify the fourth security parameter based on the third security key in the third certificate. The transceiver unit 21 is further configured to: if the verification is correct, send a response to the second authentication request to the provisioning server, where the response to the second authentication request includes the first certificate and/or the first security parameter, and the first security parameter is generated based on one or more of the user equipment identity, the manufacturer identity, the first security key, the network identity, and the NPN identity.

Optionally, the processing unit 22 is further configured to verify, based on the network identity based on which the fourth security parameter is generated, whether the network identity is consistent with a network identity corresponding to the network to which the user equipment requests access; and/or verify, based on the NPN identity based on which the fourth security parameter is generated, whether the NPN identity is consistent with an NPN identity corresponding to an NPN on which the user equipment requests for onboarding.

For specific implementation of the transceiver unit 21 and the processing unit 22, refer to descriptions of the user equipment in the network authentication methods shown in FIG. 5 A and FIG. 5B to FIG. 9A and FIG. 9B.

According to the network authentication apparatus provided in this embodiment of this application, when the network authentication apparatus does not include identity information issued by the network, the network authentication apparatus may communicate with the NPN via the network by requesting the network to execute the onboarding service.

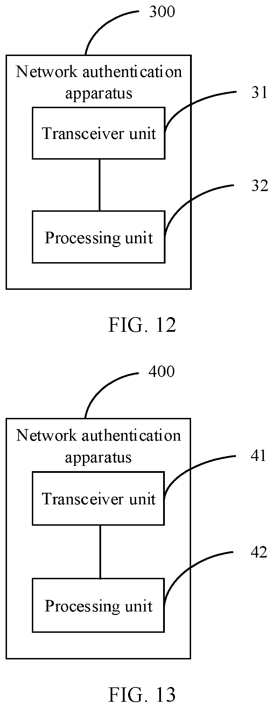

FIG. 12 is still another schematic diagram of a structure of a network authentication apparatus according to an embodiment of this application. The network authentication apparatus may be the mobility management network element in the foregoing embodiments. The network authentication apparatus 300 includes a transceiver unit 31 and a processing unit 32.

The transceiver unit 31 is configured to receive a first registration request, where the first registration request includes one or more of the following information: a user equipment identity, a manufacturer identity, a non-public network NPN identity, first indication information, and slice selection assistance information, and the first indication information is for requesting a network to execute an onboarding service. The processing unit 32 is configured to determine, based on the first indication information, that user equipment requests the network to execute the onboarding service. The transceiver unit 31 is further configured to send a subscription information obtaining request, where the subscription information obtaining request includes one or more of the following information: the user equipment identity, the manufacturer identity, a network identity, the NPN identity, and third indication information, and the third indication information indicates that the network allows execution of the onboarding service for the user equipment, and/or indicates to perform NPN authentication; receive a subscription information obtaining response, where the subscription information obtaining response includes subscription information of the user equipment; and send a first registration response, where the first registration response includes the subscription information of the user equipment.

Optionally, the processing unit 32 is further configured to determine, based on the first registration request, that the network allows execution of the onboarding service for the user equipment.

Optionally, the processing unit 32 is further configured to determine, based on the NPN identity, that the network allows execution of the onboarding service for an NPN corresponding to the NPN identity, and/or determine, based on the user equipment identity and/or the manufacturer identity, that the network allows to perform onboarding service authentication on a device of a manufacturer corresponding to the manufacturer identity. Alternatively, the transceiver unit 31 is further configured to send a second registration request, where the second registration request includes one or more of the following information: the user equipment identity, the manufacturer identity, the NPN identity, second indication information, and the slice selection assistance information, where the second indication information is for requesting the network to execute the onboarding service; and receive a second registration response, where the second registration response includes the third indication information.

Optionally, the first registration request further includes a first certificate and a first security parameter. The first security parameter is for authenticating validity of the user equipment, and is generated based on one or more of the user equipment identity, the manufacturer identity, a first security key, the network identity, and the NPN identity. The processing unit 32 is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service; and if the verification succeeds, authenticate the first security parameter based on the first security key in the first certificate, to determine that the user equipment is valid. Alternatively, the transceiver unit 31 is further configured to send a third authentication request, where the third authentication request includes one or more of the following information: the user equipment identity, the manufacturer identity, the first certificate, the NPN identity, fourth indication information, and the first security parameter, where the fourth indication information is for requesting to verify whether the user equipment is valid; and receive a third authentication response, where the third authentication response indicates whether the user equipment is valid.

For specific implementation of the transceiver unit 31 and the processing unit 32, refer to descriptions of the mobility management network element in the network authentication method embodiments shown in FIG. 5A and FIG. 5B to FIG. 9A and FIG. 9B.

According to the network authentication apparatus provided in this embodiment of this application, when the network authentication apparatus receives a registration request of the user equipment, and the user equipment does not include the identity information issued by the network, the network authentication apparatus may determine whether to allow execution of the onboarding service for the user equipment. When determining that the onboarding service can be executed for the user equipment, the network authentication apparatus may communicate with an NPN via the network.

FIG. 13 is still another schematic diagram of a structure of a network authentication apparatus according to an embodiment of this application. The network authentication apparatus may be the AUSF, the DCS, or the UDM in the foregoing embodiments. The network authentication apparatus 400 includes a transceiver unit 41 and a processing unit 42.

The transceiver unit 41 is configured to receive a subscription information obtaining request, where the subscription information obtaining request includes one or more of the following information: a user equipment identity, a manufacturer identity, a network identity, a non-public network NPN identity, and third indication information, where the third indication information indicates that a network allows execution of an onboarding service for user equipment, and/or indicates to perform NPN authentication. The processing unit 42 is configured to determine an address of a provisioning server of an NPN based on the NPN identity. The transceiver unit 41 is further configured to send a subscription information configuration request, where the subscription information configuration request includes one or more of the following information: the user equipment identity, the manufacturer identity, a first certificate, and the NPN identity; receive a subscription information configuration response, where the subscription information configuration response includes subscription information of the user equipment; and send a subscription information obtaining response, where the subscription information obtaining response includes the subscription information of the user equipment.

Optionally, the transceiver unit 41 is further configured to receive a second registration request, where the second registration request includes one or more of the following information: the user equipment identity, the manufacturer identity, the NPN identity, second indication information, and slice selection assistance information, where the second indication information is for requesting the network to execute the onboarding service. The processing unit 42 is further configured to determine, based on the second registration request, that the network allows execution of the onboarding service for the user equipment. The transceiver unit 41 is further configured to send a second registration response, where the second registration response includes the third indication information.

Optionally, the second registration request further includes the first certificate and a first security parameter. The first security parameter is for authenticating validity of the user equipment, and is generated based on one or more of the user equipment identity, the manufacturer identity, a first security key, the network identity, and the NPN identity. The processing unit 42 is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service; and if the verification succeeds, authenticate the first security parameter based on the first security key in the first certificate, to determine that the user equipment is valid.

Optionally, the transceiver unit 41 is further configured to receive a second security parameter obtaining request, where the second security parameter obtaining request includes one or more of the following information: the user equipment identity, the manufacturer identity, the NPN identity, and the network identity. The processing unit 42 is further configured to generate a second security parameter based on one or more of the user equipment identity, the manufacturer identity, the NPN identity, the network identity, and a second security key. The transceiver unit 41 is further configured to send a second security parameter obtaining response, where the second security parameter obtaining response includes the second security parameter and/or a second certificate.

Optionally, the transceiver unit 41 is further configured to receive a network authentication result notification, where the network authentication result notification includes one or more of the following information: the user equipment identity, an indication indicating the network to confirm execution of the onboarding service, a result of mutual authentication between the user equipment and the network, and the NPN identity; and forward the network authentication result notification.

For specific implementation of the transceiver unit 41 and the processing unit 42, refer to descriptions of the AUSF, the DCS, or the UDM in the network authentication method embodiments shown in FIG. 5 A and FIG. 5B to FIG. 9A and FIG. 9B.

According to the network authentication apparatus provided in this embodiment of this application, when user equipment does not include identity information issued by a network and the network executes an onboarding service for the user equipment, the network authentication apparatus may send the subscription information configuration request to the provisioning server when receiving the subscription information obtaining request sent by a mobility management network element, to request the NPN to configure subscription information for the user equipment, so that the user equipment accesses the NPN.

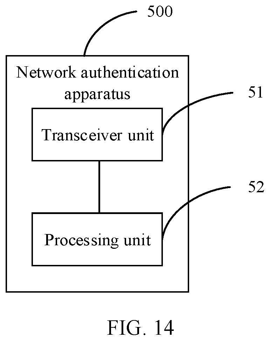

FIG. 14 is still another schematic diagram of a structure of a network authentication apparatus according to an embodiment of this application. The network authentication apparatus may be the provisioning server in the foregoing embodiments. The network authentication apparatus 500 includes a transceiver unit 51 and a processing unit 52.

A network allows user equipment to use an onboarding service, and/or the user equipment is valid. The transceiver unit 51 is configured to receive a subscription information configuration request, where the subscription information configuration request includes one or more of the following information: a user equipment identity, a manufacturer identity, a first certificate, and a non-public network NPN identity. The processing unit 52 is configured to verify correctness of the first certificate based on a root certificate of a manufacturer; and/or verify whether an NPN corresponding to the NPN identity is consistent with an NPN on which the user equipment requests for onboarding. The transceiver unit 51 is further configured to: if the verification succeeds, send a subscription information configuration response, where the subscription information configuration response includes subscription information of the user equipment.

Optionally, the transceiver unit 51 is further configured to send a second authentication request, where the second authentication request includes a fourth security parameter and/or a third certificate, and the fourth security parameter is generated based on one or more of the user equipment identity, the manufacturer identity, the NPN identity, a network identity, and a third security key; receive a response to the second authentication request, where the response to the second authentication request includes the first certificate and/or a first security parameter, and the first security parameter is generated based on one or more of the user equipment identity, the manufacturer identity, a first security key, the network identity, and the NPN identity. The processing unit 52 is further configured to verify correctness of the first certificate based on the root certificate of the manufacturer; and if the verification is correct, verify the fourth security parameter based on the first security key in the first certificate.

Optionally, the transceiver unit 51 is further configured to receive a network authentication result notification, where the network authentication result notification includes one or more of the following information: the user equipment identity, an indication indicating the network to confirm execution of the onboarding service, a result of mutual authentication between the user equipment and the network, and the NPN identity.

For specific implementation of the transceiver unit 51 and the processing unit 52, refer to descriptions of the provisioning server in the network authentication method embodiments shown in FIG. 5A and FIG. 5B to FIG. 9A and FIG. 9B.

According to the network authentication apparatus provided in this embodiment of this application, when user equipment does not include identity information issued by a network and the network executes the onboarding service for the user equipment, the network authentication apparatus configures subscription information for the user equipment when receiving the subscription information configuration request, so that the user equipment accesses the NPN.

Optionally, an embodiment of this application further provides a chip system, including at least one processor and an interface. The at least one processor is coupled to a memory through the interface. When the at least one processor executes a computer program or instructions in the memory, the method in any one of the foregoing method embodiments is performed. Optionally, the chip system may include a chip, or may include a chip and another discrete component. This is not specifically limited in this embodiment of this application.

It should be understood that unless otherwise specified, "/" in descriptions of this application represents an "or" relationship between associated objects. For example, A/B may represent A or B. A and B may be singular or plural. In addition, in descriptions of this application, unless otherwise specified, "a plurality of means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

All or some of the foregoing embodiments may be implemented using software, hardware, firmware, or any combination thereof. When a software program is used to implement embodiments, the embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), or an optical medium (for example, a digital versatile disc (digital versatile disc, DVD)), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of the claims of this application and equivalent technologies thereof.

## Claims

1. A network authentication method, wherein the method comprises:
sending a first registration request, wherein the first registration request comprises one or more of the following information: a user equipment identity, a manufacturer identity, a non-public network NPN identity, first indication information, and slice selection assistance information, and the first indication information is for requesting a network to execute an onboarding service; and
receiving a first registration response, wherein the first registration response comprises subscription information of user equipment.

2. The method according to claim 1, wherein the first registration request further comprises a first certificate and a first security parameter, the first security parameter is for authenticating validity of the user equipment, and before the sending a first registration request, the method further comprises:
generating the first security parameter based on one or more of the user equipment identity, the manufacturer identity, a first security key, a network identity, and the NPN identity.

3. The method according to claim 1 or 2, wherein the method further comprises:
receiving a first authentication request, wherein the first authentication request requests the user equipment to authenticate the network, the first authentication request comprises a third security parameter and/or a second certificate, and the third security parameter is generated based on one or more of the user equipment identity, the manufacturer identity, a second security key, the network identity, and the NPN identity;
verifying correctness of the second certificate based on a root certificate of a manufacturer; and/or verifying, based on the network identity based on which the third security parameter is generated, whether the network identity is consistent with a network identity of the network on which the user equipment requests to execute the onboarding service;
if the verification succeeds, verifying the third security parameter based on the second security key in the second certificate;
if the verification succeeds, generating the first security parameter based on one or more of the user equipment identity, the manufacturer identity, the first security key, the network identity, and the NPN identity; and
sending a first authentication response, wherein the first authentication response comprises the first certificate and/or the first security parameter.

4. The method according to any one of claims 1 to 3, wherein if the network allows the user equipment to use the onboarding service, and/or the first security parameter is valid, the method further comprises:
receiving a second authentication request from a provisioning server, wherein the second authentication request comprises a fourth security parameter and/or a third certificate, and the fourth security parameter is generated based on one or more of the user equipment identity, the manufacturer identity, the NPN identity, the network identity, and a third security key;
verifying correctness of the third certificate based on the root certificate of the manufacturer;
if the verification succeeds, verifying the fourth security parameter based on the third security key in the third certificate; and
if the verification succeeds, sending a response to the second authentication request to the provisioning server, wherein the response to the second authentication request comprises the first certificate and/or the first security parameter, and the first security parameter is generated based on one or more of the user equipment identity, the manufacturer identity, the first security key, the network identity, and the NPN identity.

5. The method according to claim 4, wherein the method further comprises:
verifying, based on the network identity based on which the fourth security parameter is generated, whether the network identity is consistent with the network identity corresponding to the network to which the user equipment requests access; and/or verifying, based on the NPN identity based on which the fourth security parameter is generated, whether the NPN identity is consistent with an NPN identity corresponding to an NPN on which the user equipment requests for onboarding.

6. A network authentication method, wherein the method comprises:
receiving a first registration request, wherein the first registration request comprises one or more of the following information: a user equipment identity, a manufacturer identity, a non-public network NPN identity, first indication information, and slice selection assistance information, and the first indication information is for requesting a network to execute an onboarding service;
determining, based on the first indication information, that user equipment requests the network to execute the onboarding service;
sending a subscription information obtaining request, wherein the subscription information obtaining request comprises one or more of the following information: the user equipment identity, the manufacturer identity, a network identity, the NPN identity, and third indication information, and the third indication information indicates that the network allows execution of the onboarding service for the user equipment, and/or indicates to perform NPN authentication;
receiving a subscription information obtaining response, wherein the subscription information obtaining response comprises subscription information of the user equipment; and
sending a first registration response, wherein the first registration response comprises the subscription information of the user equipment.

7. The method according to claim 6, wherein the method further comprises:
determining, based on the first registration request, that the network allows execution of the onboarding service for the user equipment.

8. The method according to claim 7, wherein the determining, based on the first registration request, that the network allows execution of the onboarding service for the user equipment comprises:
determining, based on the NPN identity, that the network allows execution of the onboarding service for an NPN corresponding to the NPN identity, and/or determining, based on the user equipment identity and/or the manufacturer identity, that the network allows to perform onboarding service authentication on a device of a manufacturer corresponding to the manufacturer identity; or
sending a second registration request, wherein the second registration request comprises one or more of the following information: the user equipment identity, the manufacturer identity, the NPN identity, second indication information, and the slice selection assistance information, and the second indication information is for requesting the network to execute the onboarding service; and receiving a second registration response, wherein the second registration response comprises the third indication information.

9. The method according to any one of claims 6 to 8, wherein the first registration request further comprises a first certificate and a first security parameter, the first security parameter is for authenticating validity of the user equipment, the first security parameter is generated based on one or more of the user equipment identity, the manufacturer identity, a first security key, the network identity, and the NPN identity, and the method further comprises:
verifying correctness of the first certificate based on a root certificate of a manufacturer; and/or verifying, based on the network identity based on which the first security parameter is generated, whether the network identity is consistent with a network identity of the network on which the user equipment requests to execute the onboarding service; and
if the verification succeeds, authenticating the first security parameter based on the first security key in the first certificate, to determine that the user equipment is valid; or
sending a third authentication request, wherein the third authentication request comprises one or more of the following information: the user equipment identity, the manufacturer identity, the first certificate, the NPN identity, fourth indication information, and the first security parameter, and the fourth indication information is for requesting to verify whether the user equipment is valid; and receiving a third authentication response, wherein the third authentication response indicates whether the user equipment is valid.

10. A network authentication method, wherein the method comprises:
receiving a subscription information obtaining request, wherein the subscription information obtaining request comprises one or more of the following information: a user equipment identity, a manufacturer identity, a network identity, a non-public network NPN identity, and third indication information, and the third indication information indicates that a network allows execution of an onboarding service for user equipment, and/or indicates to perform NPN authentication;
determining an address of a provisioning server of an NPN based on the NPN identity;
sending a subscription information configuration request, wherein the subscription information configuration request comprises one or more of the following information: the user equipment identity, the manufacturer identity, a first certificate, and the NPN identity;
receiving a subscription information configuration response, wherein the subscription information configuration response comprises subscription information of the user equipment; and
sending a subscription information obtaining response, wherein the subscription information obtaining response comprises the subscription information of the user equipment.

11. The method according to claim 10, wherein the method further comprises:
receiving a second registration request, wherein the second registration request comprises one or more of the following information: the user equipment identity, the manufacturer identity, the NPN identity, second indication information, and slice selection assistance information, and the second indication information is for requesting the network to execute the onboarding service;
determining, based on the second registration request, that the network allows execution of the onboarding service for the user equipment; and
sending a second registration response, wherein the second registration response comprises the third indication information.

12. The method according to claim 11, wherein the second registration request further comprises the first certificate and a first security parameter, the first security parameter is for authenticating validity of the user equipment, the first security parameter is generated based on one or more of the user equipment identity, the manufacturer identity, a first security key, the network identity, and the NPN identity, and the method further comprises:
verifying correctness of the first certificate based on a root certificate of a manufacturer; and/or verifying, based on the network identity based on which the first security parameter is generated, whether the network identity is consistent with a network identity of the network on which the user equipment requests to execute the onboarding service; and
if the verification succeeds, authenticating the first security parameter based on the first security key in the first certificate, to determine that the user equipment is valid.

13. The method according to any one of claims 10 to 12, wherein the method further comprises:
receiving a second security parameter obtaining request, wherein the second security parameter obtaining request comprises one or more of the following information: the user equipment identity, the manufacturer identity, the NPN identity, and the network identity;
generating a second security parameter based on one or more of the user equipment identity, the manufacturer identity, the NPN identity, the network identity, and a second security key; and
sending a second security parameter obtaining response, wherein the second security parameter obtaining response comprises the second security parameter and/or a second certificate.

14. The method according to claim 10 or 11, wherein the method further comprises:
receiving a network authentication result notification, wherein the network authentication result notification comprises one or more of the following information: the user equipment identity, an indication indicating the network to confirm execution of the onboarding service, a result of mutual authentication between the user equipment and the network, and the NPN identity; and
forwarding the network authentication result notification.

15. A network authentication method, wherein a network allows user equipment to use an onboarding service, and/or the user equipment is valid, and the method comprises:
receiving a subscription information configuration request, wherein the subscription information configuration request comprises one or more of the following information: a user equipment identity, a manufacturer identity, a first certificate, and a non-public network NPN identity;
verifying correctness of the first certificate based on a root certificate of a manufacturer; and/or verifying whether an NPN corresponding to the NPN identity is consistent with an NPN on which the user equipment requests for onboarding; and
if the verification succeeds, sending a subscription information configuration response, wherein the subscription information configuration response comprises subscription information of the user equipment.

16. The method according to claim 15, wherein the method further comprises:
sending a second authentication request, wherein the second authentication request comprises a fourth security parameter and/or a third certificate, and the fourth security parameter is generated based on one or more of the user equipment identity, the manufacturer identity, the NPN identity, a network identity, and a third security key;
receiving a response to the second authentication request, wherein the response to the second authentication request comprises the first certificate and/or a first security parameter, and the first security parameter is generated based on one or more of the user equipment identity, the manufacturer identity, a first security key, the network identity, and the NPN identity;
verifying correctness of the first certificate based on the root certificate of the manufacturer; and
if the verification succeeds, verifying the first security parameter based on the first security key in the first certificate.

17. The method according to claim 15 or 16, wherein the method further comprises:
receiving a network authentication result notification, wherein the network authentication result notification comprises one or more of the following information: the user equipment identity, an indication indicating the network to confirm execution of the onboarding service, a result of mutual authentication between the user equipment and the network, and the NPN identity.

18. A network authentication apparatus, wherein the apparatus comprises:
a transceiver unit, configured to send a first registration request, wherein the first registration request comprises one or more of the following information: a user equipment identity, a manufacturer identity, a non-public network NPN identity, first indication information, and slice selection assistance information, and the first indication information is for requesting a network to execute an onboarding service, wherein
the transceiver unit is further configured to receive a first registration response, wherein the first registration response comprises subscription information of the user equipment.

19. The apparatus according to claim 18, wherein the first registration request further comprises a first certificate and a first security parameter, the first security parameter is for authenticating validity of the user equipment, and the apparatus further comprises:
a processing unit, configured to generate the first security parameter based on one or more of the user equipment identity, the manufacturer identity, a first security key, a network identity, and the NPN identity.

20. The apparatus according to claim 19, wherein
the transceiver unit is further configured to receive a first authentication request, wherein the first authentication request requests the user equipment to authenticate the network, the first authentication request comprises a third security parameter and/or a second certificate, and the third security parameter is generated based on one or more of the user equipment identity, the manufacturer identity, a second security key, the network identity, and the NPN identity;
the processing unit is further configured to verify correctness of the second certificate based on a root certificate of a manufacturer; and/or verify, based on the network identity based on which the third security parameter is generated, whether the network identity is consistent with a network identity of the network on which the user equipment requests to execute the onboarding service;
the processing unit is further configured to: if the verification succeeds, verify the third security parameter based on the second security key in the second certificate;
the processing unit is further configured to: if the verification succeeds, generate the first security parameter based on one or more of the user equipment identity, the manufacturer identity, the first security key, the network identity, and the NPN identity; and
the transceiver unit is further configured to send a first authentication response, wherein the first authentication response comprises the first certificate and/or the first security parameter.

21. The apparatus according to claim 19 or 20, wherein if the network allows the user equipment to use the onboarding service, and/or the first security parameter is valid, the apparatus further comprises that:
the transceiver unit is further configured to receive a second authentication request from a provisioning server, wherein the second authentication request comprises a fourth security parameter and/or a third certificate, and the fourth security parameter is generated based on one or more of the user equipment identity, the manufacturer identity, the NPN identity, the network identity, and a third security key;
the processing unit is further configured to verify correctness of the third certificate based on the root certificate of the manufacturer;
the processing unit is further configured to: if the verification succeeds, verify the fourth security parameter based on the third security key in the third certificate; and
the transceiver unit is further configured to: if the verification succeeds, send a response to the second authentication request to the provisioning server, wherein the response to the second authentication request comprises the first certificate and/or the first security parameter, and the first security parameter is generated based on one or more of the user equipment identity, the manufacturer identity, the first security key, the network identity, and the NPN identity.

22. The apparatus according to claim 21, wherein the apparatus further comprises that:
the processing unit is further configured to verify, based on the network identity based on which the fourth security parameter is generated, whether the network identity is consistent with a network identity corresponding to the network to which the user equipment requests access; and/or verify, based on the NPN identity based on which the fourth security parameter is generated, whether the NPN identity is consistent with an NPN identity corresponding to an NPN on which the user equipment requests for onboarding.

23. A network authentication apparatus, wherein the apparatus comprises:
a transceiver unit, configured to receive a first registration request, wherein the first registration request comprises one or more of the following information: a user equipment identity, a manufacturer identity, a non-public network NPN identity, first indication information, and slice selection assistance information, and the first indication information is for requesting a network to execute an onboarding service; and
a processing unit, configured to determine, based on the first indication information, that user equipment requests the network to execute the onboarding service, wherein
the transceiver unit is further configured to send a subscription information obtaining request, wherein the subscription information obtaining request comprises one or more of the following information: the user equipment identity, the manufacturer identity, the network identity, the NPN identity, and third indication information, and the third indication information indicates that the network allows execution of the onboarding service for the user equipment, and/or indicates to perform NPN authentication;
the transceiver unit is further configured to receive a subscription information obtaining response, wherein the subscription information obtaining response comprises subscription information of the user equipment; and
the transceiver unit is further configured to send a first registration response, wherein the first registration response comprises the subscription information of the user equipment.

24. The apparatus according to claim 23, wherein
the processing unit is further configured to determine, based on the first registration request, that the network allows execution of the onboarding service for the user equipment.

25. The apparatus according to claim 24, wherein
the processing unit is further configured to determine, based on the NPN identity, that the network allows execution of the onboarding service for an NPN corresponding to the NPN identity, and/or determine, based on the user equipment identity and/or the manufacturer identity, that the network allows to perform onboarding service authentication on a device of a manufacturer corresponding to the manufacturer identity; or
the transceiver unit is further configured to send a second registration request, wherein the second registration request comprises one or more of the following information: the user equipment identity, the manufacturer identity, the NPN identity, second indication information, and the slice selection assistance information, and the second indication information is for requesting the network to execute the onboarding service; and receive a second registration response, wherein the second registration response comprises the third indication information.

26. The apparatus according to any one of claims 23 to 25, wherein the first registration request further comprises a first certificate and a first security parameter, the first security parameter is for authenticating validity of the user equipment, the first security parameter is generated based on one or more of the user equipment identity, the manufacturer identity, a first security key, the network identity, and the NPN identity;
the processing unit is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service;
the processing unit is further configured to: if the verification succeeds, authenticate the first security parameter based on the first security key in the first certificate, to determine that the user equipment is valid; or
the transceiver unit is further configured to send a third authentication request, wherein the third authentication request comprises one or more of the following information: the user equipment identity, the manufacturer identity, the first certificate, the NPN identity, fourth indication information, and the first security parameter, wherein the fourth indication information is for requesting to verify whether the user equipment is valid; and receive a third authentication response, wherein the third authentication response indicates whether the user equipment is valid.

27. A network authentication apparatus, wherein the apparatus comprises:
a transceiver unit, configured to receive a subscription information obtaining request, wherein the subscription information obtaining request comprises one or more of the following information: a user equipment identity, a manufacturer identity, a network identity, a non-public network NPN identity, and third indication information, and the third indication information indicates that a network allows execution of an onboarding service for user equipment, and/or indicates to perform NPN authentication; and
a processing unit, configured to determine an address of a provisioning server of an NPN based on the NPN identity, wherein
the transceiver unit is configured to send a subscription information configuration request, wherein the subscription information configuration request comprises one or more of the following information: the user equipment identity, the manufacturer identity, a first certificate, and the NPN identity;
the transceiver unit is further configured to receive a subscription information configuration response, wherein the subscription information configuration response comprises subscription information of the user equipment; and
the transceiver unit is further configured to send a subscription information obtaining response, wherein the subscription information obtaining response comprises the subscription information of the user equipment.

28. The apparatus according to claim 27, wherein
the transceiver unit is further configured to receive a second registration request, wherein the second registration request comprises one or more of the following information: the user equipment identity, the manufacturer identity, the NPN identity, second indication information, and slice selection assistance information, and the second indication information is for requesting the network to execute the onboarding service;
the processing unit is further configured to determine, based on the second registration request, that the network allows execution of the onboarding service for the user equipment; and
the transceiver unit is further configured to send a second registration response, wherein the second registration response comprises the third indication information.

29. The apparatus according to claim 28, wherein the second registration request further comprises the first certificate and a first security parameter, the first security parameter is for authenticating validity of the user equipment, the first security parameter is generated based on one or more of the user equipment identity, the manufacturer identity, a first security key, the network identity, and the NPN identity;
the processing unit is further configured to verify correctness of the first certificate based on a root certificate of a manufacturer; and/or verify, based on the network identity based on which the first security parameter is generated, whether the network identity is consistent with a network identity of the network on which the user equipment requests to execute the onboarding service; and
the processing unit is further configured to: if the verification succeeds, authenticate the first security parameter based on the first security key in the first certificate, to determine that the user equipment is valid.

30. The apparatus according to any one of claims 27 to 29, wherein
the transceiver unit is further configured to receive a second security parameter obtaining request, wherein the second security parameter obtaining request comprises one or more of the following information: the user equipment identity, the manufacturer identity, the NPN identity, and the network identity;
the processing unit is further configured to generate a second security parameter based on one or more of the user equipment identity, the manufacturer identity, the NPN identity, the network identity, and a second security key; and
the transceiver unit is further configured to send a second security parameter obtaining response, wherein the second security parameter obtaining response comprises the second security parameter and a second certificate.

31. The apparatus according to claim 29 or 30, wherein
the transceiver unit is further configured to receive a network authentication result notification, wherein the network authentication result notification comprises one or more of the following information: the user equipment identity, an indication indicating the network to confirm execution of the onboarding service, a result of mutual authentication between the user equipment and the network, and the NPN identity; and
the transceiver unit is further configured to forward the network authentication result notification.

32. A network authentication apparatus, wherein a network allows user equipment to use an onboarding service, and/or the user equipment is valid, and the apparatus comprises:
a transceiver unit, configured to receive a subscription information configuration request, wherein the subscription information configuration request comprises one or more of the following information: a user equipment identity, a manufacturer identity, a first certificate, and a non-public network NPN identity; and
a processing unit, configured to verify correctness of the first certificate based on a root certificate of a manufacturer; and/or verify whether an NPN corresponding to the NPN identity is consistent with an NPN on which the user equipment requests for onboarding, wherein
the transceiver unit is further configured to: if the verification succeeds, send a subscription information configuration response, wherein the subscription information configuration response comprises subscription information of the user equipment.

33. The apparatus according to claim 32, wherein
the transceiver unit is further configured to send a second authentication request, wherein the second authentication request comprises a fourth security parameter and/or a third certificate, and the fourth security parameter is generated based on one or more of the user equipment identity, the manufacturer identity, the NPN identity, a network identity, and a third security key;
the transceiver unit is further configured to receive a response to the second authentication request, wherein the response to the second authentication request comprises the first certificate and/or a first security parameter, and the first security parameter is generated based on one or more of the user equipment identity, the manufacturer identity, a first security key, the network identity, and the NPN identity;
the processing unit is further configured to verify correctness of the first certificate based on the root certificate of the manufacturer; and
the processing unit is further configured to: if the verification succeeds, verify the fourth security parameter based on the first security key in the first certificate.

34. The apparatus according to claim 32 or 33, wherein
the transceiver unit is further configured to receive a network authentication result notification, wherein the network authentication result notification comprises one or more of the following information: the user equipment identity, an indication indicating the network to confirm execution of the onboarding service, a result of mutual authentication between the user equipment and the network, and the NPN identity.

35. A network authentication apparatus, wherein the apparatus comprises a processor, a memory, and a computer program that is stored in the memory and that can run on the processor, and when the computer program is run, the method according to any one of claims 1 to 17 is performed.

36. A network authentication system, wherein the system comprises the network authentication apparatus according to any one of claims 18 to 22, the network authentication apparatus according to any one of claims 23 to 26, the network authentication apparatus according to any one of claims 27 to 31, and the network authentication apparatus according to any one of claims 32 to 34.

37. A network authentication apparatus, comprising a processor, wherein the processor is coupled to a memory, and is configured to read instructions in the memory, and implement, based on the instructions, the method according to any one of claims 1 to 17.

38. A computer-readable storage medium, storing a computer program, wherein when the program is executed by a processor, the method according to any one of claims 1 to 17 is implemented.

39. A computer program product, wherein when the computer program product is executed on a computer, the method according to any one of claims 1 to 17 is implemented.
